# EUROPÄISCHE PATENTSCHRIFT

(11) **EP 4 326 670 B1**
(45) Veröffentlichungstag und Bekanntmachung des Hinweises auf die Patenterteilung: **12.08.2026**
(21) Anmeldenummer: 22723363.2
(22) Anmeldetag: 14.04.2022
(51) Int. Cl.: C01B 3/00, C01B 3/50, B01J 8/06

(54) **VERFAHREN UND ANLAGE ZUM BEREITSTELLEN VON WASSERSTOFFGAS**
PROCESS AND SYSTEM FOR PROVIDING HYDROGEN GAS
PROCÉDÉ ET SYSTÈME DE FOURNITURE D'HYDROGÈNE GAZEUX

(30) Priorität: 19.04.2021 DE 102021203883
(43) Veröffentlichungstag der Anmeldung: 28.02.2024
(73) Patentinhaber: HYDROGENIOUS LOHC TECHNOLOGIES GMBH, 91058 Erlangen (DE)
(72) Erfinder: DISTEL, Max, 91052 Erlangen (DE); PREUSTER, Patrick, 91180 Heideck (DE); WASSERSCHEID, Peter, 91054 Erlangen (DE); GUNDERMANN, Michael, 91560 Heilsbronn (DE); ASCHERL, Johannes, 91058 Erlangen (DE); WOLF, Moritz, 76461 Muggensturm (DE)
(74) Vertreter: Rau, Schneck & Hübner Patentanwälte Rechtsanwälte PartGmbB
(86) Internationale Anmeldenummer: PCT/EP2022/060062
(87) Internationale Veröffentlichungsnummer: WO 2022/223444

(56) Entgegenhaltungen:
- DE-A1- 102008 044 946
- DE-A1- 102012 216 669
- DE-A1- 102016 121 688
- US-A1- 2019 062 236

## Beschreibung

Die vorliegende Patentanmeldung nimmt die Priorität der deutschen Patentanmeldung DE 10 2021 203 883.2 in Anspruch.

Die Erfindung betrifft ein Verfahren zum Bereitstellen von Wasserstoffgas, insbesondere durch katalytisches Dehydrieren eines zumindest teilweise beladenen Wasserstoffträgermediums.

Es ist bekannt, dass Wasserstoff an einem Wasserstoffträgermedium chemisch gebunden sein kann. Um Wasserstoffgas von dem Wasserstoffträgermedium freizusetzen, ist eine katalytische Dehydrierreaktion erforderlich, die endotherm ist.

DE 10 2016 121 688 A1 offenbart ein Verfahren zum Dehydrieren eines mit Wasserstoff angereicherten flüssigen Wasserstoffträgers sowie einen Reaktor.

US 2019/0062236 A1 offenbart eine oxidative Dehydrierung von Ethan mittels Kohlendioxid.

DE 10 2012 216 669 A1 offenbart eine Anordnung und ein Verfahren zur Energieversorgung von Schiffen.

DE 10 2008 044 946 A1 offenbart einen Einsatz von Schaumkörpern in Oxidationsreaktoren zur Herstellung ungesättigter Aldehyde oder Carbonsäuren.

Der Erfindung liegt die Aufgabe zugrunde, das Bereitstellen von Wasserstoffgas zu verbessern und insbesondere die Effizienz der Bereitstellung von Wärme, die für eine katalytische Freisetzungsreaktion von Wasserstoff erforderlich ist, zu steigern.

Diese Aufgabe ist Erfindungsgemäß gelöst durch ein Verfahren mit den Merkmalen des Anspruchs 1.

Der Kern der Erfindung besteht darin, das zumindest teilweise entladene Wasserstoffträgermedium (HO-LOHC) an einem Oxidationskatalysator, insbesondere an dessen Oberfläche, zu einem zumindest teilweise oxidierten Wasserstoffträgermedium (Oxo-LOHC) in einem Oxidationsreaktor katalytisch zu oxidieren. Die bei der Oxidationsreaktion erzeugte Wärme wird an einen Dehydrierreaktor, insbesondere unmittelbar, übertragen. In dem Dehydrierreaktor findet eine katalytische Dehydrierreaktion eines zumindest teilweise beladenen Wasserstoffträgermediums (Hx-LOHC) statt. Durch das katalytische Dehydrieren wird das zumindest teilweise beladene Wasserstoffträgermedium (Hx-LOHC) zu dem zumindest teilweise entladenen Wasserstoffträgermedium (HO-LOHC) überführt und dadurch Wasserstoffgas freigesetzt.

Es wurde insbesondere gefunden, dass die im Oxidationsreaktor erzeugte Wärme mindestens 60 % des Wärmebedarfs deckt, der für die endotherme Dehydrierreaktion in dem Dehydrierreaktor erforderlich ist, insbesondere mindestens 75 % und insbesondere mindestens 90 %. Insbesondere wird der vollständige Wärmebedarf, der für die Dehydrierreaktion erforderlich ist, in dem Oxidationsreaktor erzeugt und an den Dehydrierreaktor übertragen.

Es wurde auch gefunden, dass die katalytische Dehydrierungsreaktion in dem Dehydrierreaktor unvollständig stattfinden kann. Insbesondere weist das dem Dehydrierreaktor zugeführte, zumindest teilweise beladene Wasserstoffträgermedium einen ersten Hydriergrad auf, der insbesondere mindestens 60 %, insbesondere mindestens 80 %, insbesondere mindestens 90 %, insbesondere mindestens 95 %, insbesondere mindestens 98 %, insbesondere mindestens 99 % beträgt. Durch das katalytische Dehydrieren wird der erste Hydriergrad auf einen zweiten Hydriergrad reduziert. Die Differenz aus erstem Hydriergrad und zweiten Hydriergrad wird als Dehydrierhub bezeichnet. Der zweite Hydriergrad beträgt insbesondere höchstens 60 %, insbesondere höchstens 40 %, insbesondere höchstens 20 %, insbesondere höchstens 15 %, insbesondere höchstens 10 % und insbesondere höchstens 5 %. Dadurch verbleibt ein Anteil von chemisch gebundenem Wasserstoff an dem zumindest teilweise entladenen Wasserstoffträgermedium. Dieser Anteil kann vorteilhaft in der nachfolgenden Oxidationsreaktion zur Wärmebereitstellung genutzt werden. Der Dehydrierhub beträgt insbesondere zwischen 1 % und 95 %, insbesondere mindestens 30 %, insbesondere mindestens 50 %, insbesondere mindestens 70 %, insbesondere mindestens 80 %, insbesondere mindestens 85 %, insbesondere mindestens 90 % und insbesondere mindestens 93 % und insbesondere höchstens 95 %. Insbesondere wurde gefunden, dass die Reaktionsgeschwindigkeit der Dehydrierreaktion insbesondere abhängig ist vom ersten Hydriergrad. Insbesondere ist die Freisetzungsrate von Wasserstoff aus dem zumindest teilweise geladenem Wasserstoffträgermedium von dem ersten Hydriergrad von 100 % auf den zweiten Hydriergrad von 80 % deutlich größer als bei einem ersten Hydriergrad von 30 % auf den zweiten Hydriergrad von 10 %, obwohl der Dehydrierhub von 20 % in beiden Fällen identisch ist. Insbesondere wurde erkannt, dass eine vollständige Entladung des Wasserstoffträgermediums mit überproportionalem Aufwand verbunden ist. Insbesondere ist der Verbrauch des Katalysatormaterials für die vollständige Dehydrierreaktion überproportional hoch und/oder es sind hohe Prozesstemperaturen dafür erforderlich, wodurch die Selektivität und die Stabilität des Dehydrierkatalysators und/oder des Wasserstoffträgermediums beeinträchtigt werden. Insbesondere wurde gefunden, dass der an dem zumindest teilweise entladenen Wasserstoffträgermedium HO-LOHC chemisch gebundene Rest-Wasserstoff vorteilhaft oxidiert und somit für die Wärmebereitstellung für die Dehydrierung genutzt werden kann, wobei insbesondere eine vollständige Wärmebereitstellung für die Dehydrierung realisiert werden kann. Insbesondere ist ein vergleichsweise ineffizienter Rücktransport des zumindest teilweise entladenen Wasserstoffträgermediums HO-LOHC dadurch vermieden, da das Wasserstoffträgermedium H0-LOHC zusätzlich dehydriert wird. Der Hydriergrad des Wasserstoffträgermediums nach der Oxidation Oxo-LOHC ist insbesondere kleiner oder gleich dem zweiten Dehydriergrad nach der Dehydrierung.

In dem Oxidationsreaktor erfolgt die Umsetzung mindestens einer Alkylgruppe, insbesondere mindestens einer Methylgruppe, zu einer Aldehydgruppe (-CHO) und/oder zu einer Carbonsäuregruppe (-COOH) durch Oxidation. Zusätzlich oder alternativ erfolgt in dem Oxidationsreaktor die Umsetzung mindestens einer Alkylengruppe, insbesondere mindestens einer Methylengruppe, in eine Ketogruppe durch katalytische Oxidation.

Stromabwärts des Dehydrierreaktors kann entlang einer Fluidleitung eine Abtrenneinheit angeordnet sein. In der Abtrenneinheit können aus dem von dem Dehydrierreaktor abgeführten Fluidstrom insbesondere Hx-LOHC und HO-LOHC voneinander getrennt werden. Hx-LOHC kann aus der Abtrenneinheit in den Dehydrierreaktor zur Dehydrierung zurückgeführt werden. Die Wasserstoffgasausbeute ist dadurch insgesamt erhöht und damit auch der Gesamtwirkungsgrad.

Es ist auch denkbar, mit der Abtrenneinheit gezielt nur einen bestimmten Anteil des Hx-LOHC aus dem Fluidstrom abzutrennen, wobei dieser Anteil mindestens 30 %, insbesondere mindestens 50 %, insbesondere mindestens 70 %, insbesondere mindestens 90 % und insbesondere mindestens 95 % des in dem Fluidstrom enthaltenen Hx-LOHC beträgt. Entsprechend wird nur dieser abgetrennte Anteil zur Dehydrierung in den Dehydrierreaktor rückgeführt.

Der nicht rückgeführte Hx-LOHC-Anteil oder, wenn keine Abtrenneinheit vorgesehen ist, der gesamte Hx-LOHC-Anteil in dem Fluidstrom kann auch in den Oxidationsreaktor zusammen mit HO-LOHC geführt und dort zur Wärmebereitstellung für den Dehydrierreaktor oxidiert werden. Diese Variante ist insbesondere bei einem erhöhten Wärmebedarf vorteilhaft.

Das Verfahren, bei dem das katalytische Oxidieren mittels eines Oxidationsmittels erfolgt, ermöglicht eine selektive Durchführung unterschiedlicher Oxidationsreaktionen in dem Oxidationsreaktor. Es wurde gefunden, dass durch eine gezielte Sauerstoffzuführung eine Beeinflussung der in dem Oxidationsreaktor stattfindenden Oxidationsreaktionen möglich ist. Insbesondere kann dadurch die Wärmeerzeugung in dem Oxidationsreaktor gesteuert werden.

Ein Verfahren gemäß Anspruch 2 gewährleistet eine zuverlässige Abtrennung des freigesetzten Wasserstoffgases von dem zumindest teilweise entladenen Wasserstoffträgermedium.

Ein Verfahren gemäß Anspruch 3 ermöglicht eine zusätzliche Oxidationsreaktion in dem Oxidationsreaktor, wodurch die Gesamteffizienz des Verfahrens gesteigert ist. In dem Oxidationsreaktor kann Wasserstoffgas an dem Oxidationskatalysator zu Wasser oxidiert werden. Wasserstoffgas kann in dem dem Oxidationsreaktor zugeführten Fluidstrom in physikalisch gelöster Form vorliegen. Es wurde gefunden, dass chemisch gebundener Wasserstoff, der an dem zumindest teilweise entladenen Wasserstoffträgermedium HO-LOHC gebunden ist, effizient zu Wasser oxidiert werden kann. Der chemisch gebundene Wasserstoff ist Rest-Wasserstoff, der aufgrund der unvollständigen Dehydrierreaktion an dem Wasserstoffträgermedium noch vorhanden ist. Durch die Umsetzung von chemisch gebundenem Wasserstoff von HO-LOHC in dem Oxidationsreaktor wird der Hydriergrad weiter reduziert. Nach der Oxidationsreaktion weist das zumindest teilweise entladene und oxidierte Wasserstoffträgermedium Oxo-LOHC einen dritten Hydriergrad auf, der kleiner oder gleich ist wie der zweite Hydriergrad.

Zusätzlich können Bestandteile des freigesetzten Wasserstoffgases, das in dem Trennapparat nicht vollständig abgetrennt worden ist, vorhanden sein. Auch diese Bestandteile des freigesetzten Wasserstoffgases können in dem Oxidationsreaktor zu Wasser oxidiert werden. Insbesondere beträgt der Anteil des physikalisch gelösten und/oder freigesetzten Wasserstoffgases in dem Fluidgemisch, das dem Oxidationsreaktor zugeführt wird und das insbesondere ausschließlich das zumindest teilweise entladene Wasserstoffträgermedium und das Wasserstoffgas umfasst, höchstens 0,01 Gew.-% bezogen auf die Masse des zugeführten Fluidgemischs, insbesondere höchstens 0,005 Gew.-%, insbesondere höchstens 0,002 Gew.-% und insbesondere 0,001 Gew.-%.

Durch die mindestens eine Oxidationsreaktion wird höchstens 5 %, insbesondere höchstens 3 % und insbesondere höchstens 1 % des in dem zumindest teilweise entladenen Wasserstoffträgermedium (HO-LOHC) enthaltenen Kohlenstoffs zu Kohlenstoffdioxid (CO₂) und/oder zu Kohlenstoffmonoxid (CO) umgesetzt wird. Insbesondere erfolgt die mindestens eine Oxidationsreaktion vollständig.

Zusätzlich oder alternativ kann das zumindest teilweise entladene Wasserstoffträgermedium (H0-LOHC), zumindest anteilig, verbrannt werden. Der Wasserstoffnutzungsgrad ist dadurch erhöht. Die bereitgestellte Wärmemenge ist erhöht. Der Anteil des verbrannten Wasserstoffträgermediums HO-LOHC für die Wärmebereitstellung beträgt insbesondere höchstens 10 Vol.-%, insbesondere höchstens 8 Vol.-%, insbesondere höchstens 6 Vol.-%, insbesondere höchstens 5 Vol.-% und insbesondere höchstens 3 Vol.-%. Insbesondere kann der Anteil der als Dehydrierwärme genutzten Wärme erhöht werden. Insbesondere ist eine vollständige Deckung der benötigten Dehydrierwärme möglich.

Es kann insbesondere ein Betriebsfenster definiert werden, das einerseits die Vorteile einer möglichst vollständigen Nutzung von chemisch gebundenem Wasserstoff an dem Wasserstoffträgermedium und andererseits die zusätzliche Wärmegewinnung durch Verbrennung von zumindest teilweise entladenem Wasserstoffträgermedium verbindet.

Die Verwendung eines Wasserstoffträgermediums gemäß Anspruch 4 hat sich als besonders vorteilhaft erwiesen, da sowohl die katalytische Dehydrierreaktion als auch die nachfolgende katalytische Oxidationsreaktion besonders vorteilhaft durchführbar sind. Das Wasserstoffträgermedium ist insbesondere ein flüssiger organischer Wasserstoffträger, der insbesondere stickstofffrei ist. Das Wasserstoffträgermedium weist in der zumindest teilweise beladenen Form insbesondere mindestens eine oxidierbare Methylengruppe (-CH₂-) auf. Die mindestens eine oxidierbare Methylengruppe (-CH₂-) liegt bei dem zumindest teilweise beladenen Wasserstoffträgermedium (Hx-LOHC) und bei dem zumindest teilweise entladenen Wasserstoffträgermedium (HO-LOHC) anteilig vor. Diese Methylengruppe kann bei der Oxidationsreaktion vorteilhaft in eine Ketogruppe umgesetzt werden. Zusätzlich weist das Wasserstoffträgermedium in der zumindest teilweise beladenen Form mindestens eine Cyclohexylgruppe auf. Insbesondere ist die Methylengruppe bei dem zumindest teilweise entladenen Wasserstoffträgermedium zwischen zyklischen Einheiten oder als Teil einer Alkylkette ausgeführt, die unmittelbar an eine zyklische Einheit, insbesondere an eine Cyclohexylgruppe bzw. an eine Phenylgruppe bei zumindest teilweise entladenem LOHC, gebunden ist.

Das zumindest teilweise beladene Wasserstoffträgermedium weist ein Verhältnis der Anzahl der Kohlenstoffatome in den Cyclohexylgruppen zu den oxidierbaren Kohlenstoffatomen der im Molekül befindlichen Methylgruppen zwischen 2 und 18, insbesondere zwischen 3 und 15, insbesondere zwischen 6 und 12 und insbesondere von 12 auf. Als LOHC-System werden Verbindungen verstanden, die durch die katalytische Dehydrierreaktion und durch die katalytische Oxidationsreaktion ausgehend von einem zumindest teilweise beladenen Wasserstoffträgermedium gebildet werden können. Als Wasserstoffträgermedium können auch Mischungen eines LOHC-Systems verwendet werden, also beispielsweise die zumindest teilweise beladene Form, die zumindest teilweise entladene Form und/oder die zumindest teilweise oxidierte Form. Zusätzlich oder alternativ können auch verschiedene LOHC-Systeme gemischt sein. Denkbar ist insbesondere ein Isomerengemisch wie beispielsweise eine Mischung von Dibenzyltoluol-Isomeren und/oder Benzyltoluol-Isomeren in der zumindest teilweise entladenen Form. Geeignete LOHC-Systeme sind in Tabelle 1 zusammengefasst.

**Tabelle 1: LOHC-Systeme**

| **Beladene Form (Hx-LOHC)** | **Entladene Form (H0-LOHC)** | **Oxidierte Form (Oxo-LOHC)** |
|---|---|---|
| Dicyclohexylmethan | Diphenylmethan | Benzophenon |
| Perhydro-2-Benzyltoluol | 2-Benzyltoluol | 2-Methylbenzophenon |
| Perhydro-3-Benzyltoluol | 3-Benzyltoluol | 3-Methylbenzophenon |
| Perhydro-4-Benzyltoluol | 4-Benzyltoluol | 4-Methylbenzophenon |
| Perhydrodibenzyltoluol | Dibenzyltolouol | Benylbenzophenon |
| Perhydro-1-methylfluoren | 1-Methylfluoren | 1-Methylfluorenon |
| Perhydro-2-methylfluoren | 2-Methylfluoren | 2-Methylfluorenon |
| Perhydro-3-methylfluoren | 3-Methylfluoren | 3-Methylfluorenon |
| Perhydro-4-methylfluoren | 4-Methylfluoren | 4-Methylfluorenon |
| Perhydro-2-phenyltoluol | 2-Phenyltoluol | 2-Phenylbenzaldehyd oder 2-Phenylbenzoesäure |
| Perhydro-3-phenyltoluol | 3-Phenyltoluol | 3-Phenylbenzaldehyd oder 3-Phenylbenzoesäure |
| Perhydro-4-phenyltoluol | 4-Phenyltoluol | 4-Phenylbenzaldehyd oder 4-Phenylbenzoesäure |
| Decalin | Naphthalin | - |
| Perhydroanthracen | Anthracen | Anthrachinone oder Xanthone |
| Perhydro-2-ethyl-diphenylmethan | 2-Ethyl-Diphenylmethan | 2-Ethylbenzophenon oder 2-Acetylbenzophenon |
| Perhydro-3-ethyl-diphenylmethan | 3-Ethyldiphenylmethan | 3-Ethylbenzophenon oder 3-Acetylbenzophenon |
| Perhydro-4-ethyl-diphenylmethan | 4-Ethyldiphenylmethan | 4-Ethylbenzophenon oder 4-Acetylbenzophenon |
| Perhydro-biphenyl | Biphenyl | - |
| Perhydro-2-ethylbiphenyl | 2-Ethylbiphenyl | 2-Acetylbiphenyl |
| Perhydro-3-ethylbiphenyl | 3-Ethylbiphenyl | 3-Acetylbiphenyl |
| Perhydro-4-ethylbiphenyl | 4-Ethylbiphenyl | 4-Acetylbiphenyl |
| Perhydro-diethylbiphenyl | Diethylbiphenyl | Acetylethylbiphenyl oder Diacetylbiphenyl |
| Ethylcyclohexan | Ethylbenzol | Acetylbenzol |
| 1,2-Diethylcyclohexan | 1,2-Diethylbenzol | 1-Acetyl-2-ethylbenzol oder 1,2-Diacetylbezol |
| 1,3-Diethylcyclohexan | 1,3-Diethylbenzol | 1-Acetyl-3-ethylbenzol oder 1,3-Diacetylbenzol |
| 1,4-Diethylcyclohexan | 1,4-Diethybenzol | 1-Acetyl-3-ethylbenzol oder 1,3-Diacetylbenzol |
| Methylcyclohexan | Toluol | Benzaldehyd oder Benzoesäure |

Grundsätzlich gilt, dass die beladene Form in dem Dehydrierreaktor in die entladene Form überführt wird. Die entladene Form wird in dem Oxidationsreaktor in die oxidierte Form überführt.

Eine Ausnahme bildet insofern Biphenyl, das in dem Oxidationsreaktor chemisch nicht umgesetzt wird. Es wurde aber gefunden, dass die Beimischung von Biphenyl insbesondere zu Diphenylmethan aufgrund der Erzeugung eutektischer Mischungen mit einem reduzierten Schmelzpunkt, insbesondere relativ zu den Schmelzpunkten der Reinstoffe vorteilhaft ist. Beispielsweise liegt eine 30:70-Mischung aus Biphenyl mit einem Schmelzpunkt von etwa 69° C und Diphenylmethan mit einem Schmelzpunkt von etwa 26° C bei einer Temperatur von 15° C noch im flüssigen Zustand vor. Daraus ergibt sich ein breiter Einsatzbereich als flüssiges Wasserstoffträgermedium für diese Mischung. Insbesondere bleibt die Pumpbarkeit des Wasserstoffträgermediums auch bei kälteren Umgebungstemperaturen ohne zusätzlichen Energieaufwand, beispielsweise durch Beheizung von Tanks und/oder Rohrleitungen, gewährleistet. Zusätzlich wurde gefunden, dass Biphenyl eine hohe Wasserstoffspeicherkapazität von 7,3 Gew.-% aufweist. Dadurch, dass die eutektische Mischung aus Diphenylmethan und Biphenyl ausschließlich eine Methylengruppe aufweist, kann die entsprechende Oxidationsreaktion mit einer hohen Selektivität in dem Oxidationsreaktor durchgeführt werden.

Vorteilhaft für das zumindest teilweise entladene Wasserstoffträgermedium (HO-LOHC) ist eine Mischung aus Benzyltoluol und Diphenylmethan, insbesondere in einem Mischungsverhältnis zwischen 1:100 und 100:1, insbesondere zwischen 1:20 und 20:1 und insbesondere zwischen 1:10 und 10:1.

Ein Vorteil der Mischung aus Benzyltoluol und Diphenylmethan besteht darin, dass deren Schmelzpunkt unterhalb der Raumtemperatur liegt, also bei Raumtemperatur flüssig ist, obwohl der Schmelzpunkt von Diphenylmethan bei etwa 25 °C liegt, also oberhalb der Raumtemperatur von 20 °C.

Außerdem wurde gefunden, dass eine gezielte und insbesondere selektive Oxidation von Diphenylmethan erfolgen kann. Aufgrund seiner fehlenden Methylgruppe lässt sich Diphenylmethan besonders vorteilhaft selektiv in eine gewünschte Oxidspezies umsetzen. Es ist beispielsweise denkbar, stromaufwärts des Oxidationsreaktors eine Abtrenneinheit anzuordnen, um Diphenylmethan selektiv aus dem Gemisch zu verdampfen, also von Benzyltoluol abzutrennen. Das verdampfte Diphenylmethan kann dem Oxidationsreaktor zugeführt und dort unter Wärmeerzeugung umgesetzt werden. Der abgetrennte Benzyltoluol-Strom kann an dem Oxidationsreaktor vorbeigeführt und nach dem Oxidationsreaktor mit dem oxidierten Diphenylmethan wieder gemischt werden. Dadurch könnte der Schmelzpunkt dieser Mischung nach der Kondensation und Abkühlung reduziert werden.

Ein Verfahren, bei dem das zumindest teilweise beladene Wasserstoffträgermedium ein Kohlenstoffgerüst aufweist, wobei insbesondere höchstens 20% des Kohlenstoffgerüsts, insbesondere höchstens 10% des Kohlenstoffgerüsts und insbesondere höchstens 3% des Kohlenstoffgerüsts durch die Oxidationsreaktion verändert, insbesondere gespaltet werden, gewährleistet eine vorteilhafte und effiziente Verwendung eines LOHC-Systems, das sowohl für die Dehydrierreaktion als auch für die Oxidationsreaktion geeignet ist. Als Kohlenstoffgerüst des zumindest teilweise beladenen Wasserstoffträgermediums wird die Grundstruktur des Wasserstoffträgermediums bezeichnet. Von dieser Grundstruktur kann durch die Oxidationsreaktion Wasserstoff entfernt werden. Dies kann bei ungeeigneter Verfahrensführung zu einer unbeabsichtigten Spaltung des Kohlenstoffgerüsts und damit zu einer Zerstörung und/oder Degradation des Wasserstoffträgermediums führen. Dabei kann mindestens eine Alkylgruppe und/oder mindestens eine Alkylengruppe abgespaltet und, insbesondere vollständig, zu Kohlenstoffmonoxid (CO) und/oder Kohlenstoffdioxid (CO₂) oxidiert werden. Benzyltoluol als Wasserstoffträgermedium kann insbesondere zu Diphenylmethan oder fragmentiert in Toluol und/oder Benzol umgesetzt werden. Zusätzlich oder alternativ ist eine Umsetzung in die jeweils oxidierte Form, also in Benzophenone, Benzoesäure oder Benzaldehyd möglich, wobei Benzoesäure und Phtalsäureanhydrid als Hauptspaltprodukte auftreten. Es wurde insbesondere gefunden, dass bei der Oxidation des Wasserstoffträgermediums zusätzlich zu den Spaltprodukten andere hochsiedende Moleküle als Nebenprodukte gebildet werden, insbesondere falls Alkylgruppen nicht vollständig oxidiert und als CO und oder CO₂ abgespaltet werden, sondern intermolekular mit anderen Wasserstoffträgermedien wechselwirken. Bei der Oxidation von Diphenylmethan und Biphenyl treten insbesondere als hochsiedende Moleküle Fluorenone, Xanthone und/oder Antrachinone auf. Beispielsweise findet eine Polymerisierung und/oder eine Kondensationsreaktion statt, wodurch neue, größere Moleküle gebildet werden. Der Verlust und/oder die Degradation des Wasserstoffträgermediums infolge der Oxidationsreaktion ist unerwünscht. Das Verfahren garantiert eine niedrige Degradationsrate, die insbesondere vorteilhaft ist für die Gesamtwirtschaftlichkeit des Verfahrens.

Als besonders vorteilhaft hat es sich erwiesen, wenn das Wasserstoffträgermedium sowohl eine Methyl- als auch eine Methylen-Gruppe aufweist, wie beispielsweise Benzyltoluol. Bei dem Wasserstoffträgermedium kann sowohl die Methyl-Gruppe als auch die Methylen-Gruppe oxidiert werden. Das Wasserstoffträgermedium wird insbesondere zweifach oxidiert, sodass eine erhöhte, insbesondere doppelte Menge an Wärme freigesetzt werden kann. Ein zusätzlicher Wärmebedarf für die Dehydrierung ist reduziert und insbesondere entbehrlich. Vorteilhaft ist, dass das doppelt oxidierte Wasserstoffträgermedium wieder reversibel in einen hydrierten Kohlenwasserstoff, also zumindest teilweise beladenes Wasserstoffträgermedium umgewandelt werden kann.

Die Verwendung eines Oxidationskatalysators gemäß Anspruch 5 hat sich als vorteilhaft erwiesen. Der Oxidationskatalysator kann in einer oxidierten und in einer reduzierten Form vorliegen. Der Oxidationskatalysator wird insbesondere unter Übertragung von mindestens einem Sauerstoffatom auf das zumindest teilweise entladene Wasserstoffträgermedium selbst reduziert und durch ein Oxidationsmittel, insbesondere Luft, reoxidiert. Das bedeutet, dass der Oxidationskatalysator dadurch oxidierend wirkt, dass er selbst reduziert wird.

Insbesondere weist der Oxidationskatalysator mindestens ein Metall, insbesondere mehrere Metalle auf, die insbesondere auf einem porösen Trägermaterial aufgebracht sind. Als Metall dient beispielsweise Vanadium, Antimon, Caesium, Mangan, Titan, Eisen, Kobalt, Kupfer, Platin, Palladium, Ruthenium, Cer und/oder Nickel. Als besonders vorteilhaft haben sich Oxidationskatalysatoren erwiesen, die Vanadium und insbesondere zusätzlich Antimon, Eisen und/oder Caesium aufweisen. Insbesondere wurde gefunden, dass Metalloxide, insbesondere Titanoxid, Vanadiumoxid, Eisenoxid und/oder Ceroxid, als Oxidationskatalysator verwendet werden können. Ein separates Trägermaterial ist in diesem Fall nicht erforderlich, da das jeweilige Metalloxid den Oxidationskatalysator darstellt. Als poröse Trägermaterialien haben sich insbesondere poröse Metalloxid-Träger, insbesondere Titanoxid, Ceroxid, Aluminiumoxid und/oder Siliziumoxid erwiesen. Zusätzlich oder alternativ sind auch kohlenstoffhaltige Trägermaterialien, insbesondere Aktivkohle, möglich. Insbesondere ist es möglich, eine Kombination verschiedener Materialien der vorstehend genannten zu verwenden. Als besonders geeignet hat sich ein Oxidationskatalysator erwiesen, der aus Vanadium(V)-Oxid, Antimon(III)-Oxid und Caesiumcarbonat auf Titanoxid aufgebaut ist.

Insbesondere ist der metallhaltige, katalytisch aktive Feststoff mit einem Massenanteil von 0,01 % bis 50 %, insbesondere von 0,1 % bis 10 % und insbesondere mit 0,3 % bis 5 % auf dem porösen Trägermaterial angebracht.

Der Oxidationskatalysator liegt insbesondere in Form eines gepackten Betts vor. Insbesondere kann der Oxidationskatalysator mehrere und insbesondere verschiedene Materialien umfassen, die insbesondere schichtweise angeordnet sind. Insbesondere umfasst der Oxidationskatalysator also mehrere Schichten, die jeweils unterschiedliche Materialien aufweisen. Dadurch ist es möglich, dass die einzelnen Schichten optimierte und unterschiedliche Optionen erfüllen. Ein derartiger Oxidationskatalysator ist funktionsoptimiert. Die einzelnen Schichten sind funktional getrennt.

Alternativ kann der Oxidationskatalysator auch als strukturierter Katalysator wie beispielsweise aktive Reaktoreinbauten im Oxidationsreaktor vorliegen. Die Kontaktierung des Oxidationskatalysators mit dem zumindest teilweise entladenen Wasserstoffträgermedium erfolgt gasförmig und/oder flüssig. Als vorteilhaft hat sich die Kontaktierung des Oxidationskatalysators mit gasförmigem Wasserstoffträgermedium erwiesen.

Als Oxidationsmittel dient gemäß Anspruch 6 Luft, die insbesondere mit Sauerstoff abgereichert ist. Es wurde gefunden, dass die gezielte Einstellung der Sauerstoffkonzentration im Oxidationsmittel geeignet ist, das Temperaturprofil und insbesondere eine Temperaturverteilung in dem Oxidationsreaktor gezielt einzustellen. Es ist insbesondere möglich, die Wärmeübertragung von dem Oxidationsreaktor auf den Dehydrierreaktor durch den Sauerstoffanteil im Oxidationsmittel zu beeinflussen. Insbesondere wurde gefunden, dass eine reduzierte Sauerstoffkonzentration im Oxidationsmittel für die Einstellung eines homogenen Temperaturprofils vorteilhaft ist. Insbesondere beträgt der Sauerstoffanteil in dem Oxidationsmittel höchstens 20 Vol.-%, insbesondere höchstens 18 Vol.-%, insbesondere höchstens 15 Vol.-%, insbesondere höchstens 12 Vol.-% und insbesondere höchstens 10 Vol.-%.

Mit Sauerstoff abgereicherte Luft kann insbesondere aus einer Kathodenkammer einer mit Wasserstoff betriebenen Brennstoffzelle und/oder aus einem Abgasstrang eines Wasserstoff-Verbrennungsmotors stammen. Zusätzlich oder alternativ kann die mit Sauerstoff abgereicherte Luft auch aus dem Oxidationsreaktor selbst stammen und in Form eines Kreislaufs in den Oxidationsreaktor rückgeführt werden.

In einer ersten Ausführungsform wird die Oxidationsreaktion bei gleichzeitiger Anwesenheit des zumindest teilweise entladenen Wasserstoffträgermediums und des Oxidationsmittels im Kontakt mit dem Oxidationskatalysator durchgeführt. Insbesondere werden das zumindest teilweise entladene Wasserstoffträgermedium und das Oxidationsmittel gemeinsam und zeitgleich dem Oxidationsreaktor zugeführt.

In einer zweiten Ausführungsform wird die Zugabe des zumindest teilweise entladenen Wasserstoffträgermediums und die Zugabe des Oxidationsmittels zeitlich entkoppelt. Die Oxidationsreaktion wird dabei in einer Weise durchgeführt, bei der zunächst in einem ersten Reaktionstakt nur das zumindest teilweise entladene Wasserstoffträgermedium mit dem oxidierten Katalysator im Reaktionsapparat kontaktiert wird und dabei durch Reaktion des am Katalysator gebundenen Sauerstoffs mit dem zumindest teilweise entladenen Wasserstoffträgermedium die oxidierte Form des Katalysators in eine reduzierte Form des Katalysators unter Übertragung von zumindest einem Sauerstoffatom auf das zumindest teilweise entladene Wasserstoffträgermedium erfolgt. Das bedeutet insbesondere, dass die Oxidation in dem Oxidationsreaktor ohne externe Sauerstoffzufuhr, insbesondere Luftzufuhr ermöglicht ist. Der auf diese Weise reduzierte Katalysator wird im Anschluss in einem zweiten Reaktionstakt ohne weitere Zugabe des zumindest teilweise entladenen Wasserstoffträgermediums, aber unter Zugabe eines Oxidationsmittels, insbesondere unter Zugabe von Luft, wieder oxidiert. Dadurch wird der Katalysator regeneriert. Dieser zweite Reaktionstakt kann unter anderen oder gleichen Temperatur- und Druckbedingungen ausgeführt werden wie der erste Reaktionstakt. In dieser zweiten Ausführungsform wechseln sich der erste und zweite Reaktionstakt insbesondere in regelmäßigen Abständen ab. Der Taktwechsel erfolgt in Zeitintervallen zwischen 2 Sekunden und 5 Stunden, insbesondere zwischen 10 Sekunden und 1 Stunde und insbesondere zwischen 60 Sekunden und 30 Minuten. Die Reaktionstakte können gleiche oder unterschiedliche Zeitspannen umfassen.

Es wurde überraschend gefunden, dass die zeitliche Entkoppelung der Zugabe des zumindest teilweise entladenen Wasserstoffträgermediums und des Oxidationsmittels in dieser zweiten Ausführungsform zu einer erhöhten Selektivität bei der Oxidation des zumindest teilweise entladenen Wasserstoffträgermediums führt. Insbesondere ist unter vergleichbaren Temperatur- und Druckbedingungen die unerwünschte Bildung von Kohlenstoffdioxid deutlich erniedrigt.

Es ist insbesondere vorteilhaft, wenn mehrere Oxidationsreaktoren verwendet werden, die insbesondere in ihrem Betrieb wechselweise getaktet sind. Dadurch kann insbesondere sichergestellt werden, dass zumindest ein Oxidationsreaktor zur Oxidation verwendet wird. Der mindestens eine andere Oxidationsreaktor kann, insbesondere vorübergehend, regenerieren. Es ist möglich, dass in mehreren Oxidationsreaktoren parallel Oxidationen stattfinden.

Ein Verfahren gemäß Anspruch 7 ermöglicht eine vorteilhafte Wärmeübertragung von dem Oxidationsreaktor zu dem Dehydrierreaktor. Als mittlere Temperatur im Oxidationsreaktor und/oder im Dehydrierreaktor wird insbesondere ein Temperatur-Mittelwert verstanden, der sich insbesondere in einem stationären Betriebszustand ergibt. Insbesondere kann der Temperatur-Mittelwert eines Temperaturprofils über die Länge eines Reaktionsrohres gebildet werden.

Insbesondere beträgt die mittlere Temperatur im Oxidationsreaktor mindestens 270° C, insbesondere mindestens 300° C und insbesondere mindestens 330° C. Die mittlere Verweilzeit des zumindest teilweise entladenen Wasserstoffträgermediums im Oxidationsreaktor beträgt zwischen 0,001 min und 100 min, insbesondere zwischen 0,01 min und 30 min und insbesondere zwischen 0,05 min und 10 min.

Die mittlere Temperatur im Dehydrierreaktor beträgt insbesondere mindestens 170° C, insbesondere mindestens 200° C, insbesondere mindestens 250° C, insbesondere mindestens 280° C, insbesondere mindestens 300° C und insbesondere mindestens 310° C. Die mittlere Verweilzeit des zumindest teilweise beladenen Wasserstoffträgermediums im Dehydrierreaktor beträgt zwischen 0,01 min und 600 min, insbesondere zwischen 1 min und 120 min und insbesondere zwischen 3 min und 30 min.

Ein Verfahren gemäß Anspruch 8 hat sich insbesondere hinsichtlich der Wärmeübertragung von dem Oxidationsreaktor auf den Dehydrierreaktor als besonders vorteilhaft erwiesen. Bei einem Betrieb der Reaktoren im Gegenstrom ist die Fluidströmungsrichtung der Fluide durch den Dehydrierreaktor zu der Fluidströmungsrichtung durch den Oxidationsreaktor antiparallel gerichtet, also parallel, aber in entgegengesetzter Richtung orientiert. Insbesondere ist die Fluidströmungsrichtung beim Gegenstromverfahren sowohl im Dehydrierreaktor als auch im Oxidationsreaktor vertikal orientiert.

Im Kreuzstromverfahren sind die Fluidströmungsrichtungen im Dehydrierreaktor und Oxidationsreaktor quer, insbesondere senkrecht zueinander, orientiert. Insbesondere ist die Fluidströmungsrichtung durch den Dehydrierreaktor horizontal und die Fluidströmungsrichtung durch den Oxidationsreaktor vertikal orientiert.

Ein Verfahren gemäß Anspruch 9 ermöglicht eine geregelte und insbesondere dynamische Bereitstellung eines Wärmebedarfs für die Dehydrierreaktion in dem Dehydrierreaktor. Insbesondere wurde gefunden, dass die im Oxidationsreaktor freigesetzte Wärme größer ist als der für die Dehydrierreaktion erforderliche Wärmebedarf. Es ist deshalb insbesondere möglich, den gesamten Wärmebedarf der Dehydrierreaktion durch die Oxidationsreaktion zur Verfügung zu stellen. Das Verfahren eignet sich insbesondere für mobile Anwendungen, da insbesondere zusätzliche Erwärmungseinheiten entbehrlich sind. Das Verfahren eignet sich insbesondere bei reduzierter Wasserstoffausbeute pro Wasserstoffträgermedium, wenn insbesondere eine vergleichsweise geringe Entladung, also ein vergleichsweiser geringer Dehydrierhub erfolgt. Das Verfahren ermöglicht insbesondere eine erhöhte zeitliche Wasserstoffausbeute, es wird also mehr Wasserstoffträgermedium pro Zeiteinheit im Dehydrierreaktor dehydriert.

Es wurde gefunden, dass eine vollständige Wärmedeckung der Dehydrierreaktion insbesondere für mobile, sogenannte On-board-Anwendungen vorteilhaft ist. Vorteilhaft ist es, die nur teilweise, reduzierte Dehydrierung in dem Dehydrierreaktor, insbesondere geregelt, derart durchzuführen, dass das reduziert dehydrierte Wasserstoffträgermedium anschließend im Oxidationsreaktor für die Wärmebereitstellung im Dehydrierreaktor ausreichend oxidiert werden kann. In Abhängigkeit der Reaktionsbedingungen kann der Eingangshydriergrad des zumindest teilweise dehydrierten Wasserstoffträgermediums höchstens 20 % und höchstens 15 % betragen. Es ist insbesondere denkbar, eine Regelung für die Dehydrierreaktionen im Dehydrierreaktor derart einzurichten, dass die Wärmebereitstellung aufgrund der Oxidation von verbliebenem, chemisch gebundenem Wasserstoff an dem Wasserstoffträgermedium den Wärmebedarf für die Dehydrierung im Dehydrierreaktor vollständig deckt.

Insbesondere ist es vorteilhaft, die geregelte und insbesondere dynamische Oxidationsreaktion in Abhängigkeit des zweiten Hydriergrads durchzuführen. Es wurde insbesondere gefunden, dass die Dynamik der Oxidationsreaktion insbesondere für On-board-Anwendungen interessant ist, um den, insbesondere dynamischen, Energiebedarf eines Verbrauchers bereitstellen zu können. Dynamische Prozesse infolge des Energiebedarfs des Verbrauchers, insbesondere Anfahrprozesse, Beschleunigungen und so weiter, können zu starken Schwankungen des Dehydrierhubs in dem Dehydrierreaktor führen. Die Bereitstellung des zumindest teilweise entladenen Wasserstoffträgermediums mit einem reduzierten zweiten Hydriergrad für die nachfolgende Oxidationsreaktion ermöglicht insbesondere eine erhöhte Wasserstofffreisetzungsrate für den Wasserstoffverbraucher. Zusätzlich wurde gefunden, dass aufgrund des reduzierten zweiten Hydriergrads eine höhere Wärmeleistung in dem Oxidationsreaktor möglich ist.

Insbesondere eignet sich das Verfahren bei einem Anfahrprozess einer entsprechenden Anlage, also aus dem Ruhezustand der Anlage heraus in einen quasi-stationären Betriebszustand.

Der für die Dehydrierung erforderliche Wärmebedarf liegt insbesondere zwischen 5 kWh/kg (H₂) bis 20 kWh/kg (H₂), insbesondere zwischen 8 kWh/kg (H₂) und 15 kWh/kg (H₂) und insbesondere zwischen 10 kWh/kg (H₂) und 12 kWh/kg (H₂), für stationäre Anlagen. Bei einer mobil genutzten Anlage kann der Wärmebedarf auch größer oder kleiner als der Wärmebedarf für eine stationäre Anlage sein.

Insbesondere ermöglicht das Verfahren eine bedarfsgerechte Wärmedeckung in dem Dehydrierreaktor. Bedarfsgerecht bedeutet, dass insbesondere in Abhängigkeit des Energiebedarfs eines Verbrauchers, also der erforderlichen Wasserstofffreisetzungsrate, die hierfür erforderliche Wärme, die über den Oxidationsreaktor bereitgestellt wird, geregelt werden kann. Dazu kann insbesondere der zweite Hydriergrad, also der Hydriergrad nach der Dehydrierreaktion, als Regelgröße dienen. Insbesondere bedeutet ein geringer zweiter Hydriergrad eine vergleichsweise höhere Wärmefreisetzung in der Oxidationsreaktion.

Eine Anlage die nicht unter die vorliegende Erfindung fällt, mit einem Dehydrierreaktor zum katalytischen Dehydrieren eines zumindest teilweise beladenen Wasserstoffmediums zu einem zumindest teilweise entladenen Wasserstoffträgermedium und dadurch Freisetzen von Wasserstoffgas, mit einem mit dem Dehydrierreaktor in Fluidverbindung stehenden Oxidationsreaktor zum katalytischen Oxidieren des zumindest teilweise entladenen Wasserstoffträgermediums an einem Oxidationskatalysator zu einem zumindest teilweise oxidierten Wasserstoffträgermedium sowie mit einer Wärmeübertragungseinheit zum Übertragen von in dem Oxidationsreaktor erzeugter Wärme zu dem Dehydrierreaktor, weist im Wesentlichen die Vorteile des Verfahrens gemäß Anspruchs 1 auf, worauf hiermit verwiesen wird. Die Anlage weist einen Dehydrierreaktor, einen damit in Fluidverbindung stehenden Oxidationsreaktor sowie eine Wärmeübertragungseinheit auf. Die Wärmeübertragungseinheit dient zum Übertragen der Wärme, die im Oxidationsreaktor erzeugt wird, auf den Dehydrierreaktor. Die Wärmeübertragungseinheit ist insbesondere derart ausgeführt, dass eine zuverlässige und insbesondere im Wesentlichen verlustfreie, Wärmeübertragung ermöglicht ist. Insbesondere beträgt der Wärmeverlust bei der Wärmeübertragung maximal 30 %, insbesondere maximal 25 %, insbesondere maximal 20 %, insbesondere maximal 15 %, insbesondere maximal 10 %, insbesondere maximal 8 %, insbesondere maximal 5 %, insbesondere maximal 3 %, insbesondere maximal 1 % und insbesondere maximal 0,1 % des Wärmebetrags, der von dem Oxidationsreaktor bereitgestellt wird. Die Wärmeübertragungseinheit ermöglicht die Übertragung eines Wärmebetrags, der mindestens 60 % des Wärmebedarfs entspricht, der für die Dehydrierreaktion in dem Dehydrierreaktor erforderlich ist.

Die Ausführung einer Wärmeübertragungseinheit, die den Dehydrierreaktor und den Oxidationsreaktor zumindest teilweise umfasst für eine, insbesondere unmittelbare, Wärmeübertragung von dem Oxidationsreaktor zu dem Dehydrierreaktor, insbesondere durch Wärmeleitung und/oder Konvektion, hat sich als besonders vorteilhaft erwiesen. Die Wärmeübertragungseinheit ist kompakt und unaufwändig ausgeführt. Insbesondere umfasst die Wärmeübertragungseinheit Komponenten des Dehydrierreaktors und/oder des Oxidationsreaktors. Insbesondere ist die Wärmeübertragungseinheit ausschließlich durch Komponenten des Dehydrierreaktors und/oder des Oxidationsreaktors gebildet. Insbesondere sind zusätzliche Komponenten für die Herstellung der Wärmeübertragungseinheit entbehrlich. Insbesondere ist die Wärmeübertragungseinheit als Rohrbündelwärmetauscher ausgeführt, wobei ein Wärmeübertragungsfluid, insbesondere Thermoöl, als Wärmeträger verwendet wird. Zusätzlich oder alternativ ist es denkbar, dass der Oxidationsreaktor zumindest teilweise von dem Dehydrierreaktor unmittelbar umgeben ist, insbesondere mindestens ein Oxidationsrohr des Oxidationsreaktors von dem Dehydrierreaktor umgeben ist und insbesondere das mindestens eine Oxidationsrohr, insbesondere bereichsweise und insbesondere vollständig von Dehydrierkatalysator umgeben und insbesondere in Dehydrierkatalysator eingebettet ist.

Eine Wärmeübertragungseinheit, die dadurch gebildet ist, dass der Oxidationsreaktor zumindest bereichsweise in den Dehydrierreaktor integriert ist, insbesondere mindestens 50 % des Bauraums des Oxidationsreaktors innerhalb eines vom Dehydrierreaktor umschlossenen Bauraums angeordnet sind, insbesondere mindestens 80 % und insbesondere mindestens 90 %, ermöglicht eine kompakte Bauweise und eine effiziente Wärmeübertragung, insbesondere durch Wärmeleitung.

Eine Ausgestaltung der Wärmeübertragungseinheit, bei der der Oxidationsreaktor mehrere, insbesondere mit dem Oxidationskatalysator gefüllte, Oxidationsrohre aufweist, die beabstandet zueinander angeordnet sind, wobei in zwischen den Oxidationsrohren gebildeten Zwischenräumen der Dehydrierkatalysator angeordnet ist, ist besonders effizient und ermöglicht eine effiziente Dehydrierreaktion und Oxidationsreaktion. Der Oxidationsreaktor und der Dehydrierreaktor sind besonders kompakt angeordnet. Vorteilhaft ist es, wenn in dem Oxidationsreaktor, insbesondere in den einzelnen Oxidationsrohren, der Oxidationskatalysator mit veränderlich festlegbarer Konzentration anordenbar ist. Durch eine veränderliche Festlegung der Konzentration des Oxidationskatalysators können die Reaktionsbedingungen in den Oxidationsrohren gezielt verändert werden, beispielsweise die Reaktionsgeschwindigkeit, die Wärmeerzeugung oder die Rate, mit der Wasser gebildet wird. Eine Veränderung der Konzentration des Oxidationskatalysators ist beispielsweise durch Beimischung von Inertmaterial möglich, das an der Oxidationsreaktion nicht teilnimmt. Inertmaterial ist beispielweise Katalysatorträgermaterial ohne die aktive katalytische Komponente. Durch die Beimischung des Inertmaterials ist also eine Reaktionssteuerung möglich, insbesondere um ein homogeneres, isothermes Temperaturprofil innerhalb der Oxidationsrohre einzustellen.

Der Oxidationskatalysator liegt insbesondere in Form eines gepackten Betts vor. Insbesondere kann der Oxidationskatalysator mehrere und insbesondere verschiedene Materialien umfassen, die insbesondere schichtweise angeordnet sind. Insbesondere umfasst der Oxidationskatalysator also mehrere Schichten, die jeweils unterschiedliche Materialien aufweisen.

Dadurch ist es möglich, dass die einzelnen Schichten optimierte und unterschiedliche Optionen erfüllen. Ein derartiger Oxidationskatalysator ist funktionsoptimiert. Die einzelnen Schichten sind funktional getrennt.

Eine Anlage, die nicht unter die vorliegende Erfindung fällt, mit einem Trennapparat , der insbesondere entlang einer Fluidströmungsrichtung zwischen dem Dehydrierreaktor und dem Oxidationsreaktor angeordnet ist, zum Abtrennen des Wasserstoffgases von dem zumindest teilweise entladenen Wasserstoffträgermedium, wobei der Trenn-apparat insbesondere eine erste Kammer und eine fluidtechnisch damit verbundene zweite Kammer aufweist, ermöglicht das vorteilhafte Abtrennen des Wasserstoffgases von dem zumindest teilweise entladenen Wasserstoffträgermedium. Als vorteilhaft hat sich ein Trenn-apparat erwiesen, der zwei miteinander in Fluidverbindung stehende

Kammern aufweist. In einer ersten Kammer kann insbesondere eine Phasentrennung des flüssigen Wasserstoffträgermediums von dem gasförmigen Wasserstoff erfolgen. In der zweiten Kammer kann das flüssige, zumindest teilweise entladene Wasserstoffträgermedium zwischengespeichert werden, insbesondere für die Rückführung in den Oxidationsreaktor. Die Zwischenspeicherung ermöglicht es, einen Vorrat an HO-LOHC vorzuhalten, um beispielsweise den erforderlichen Wärmebedarf dynamischer decken zu können, indem eine höhere oder niedrigere Beschickung des Oxidationsreaktors erfolgt. Zusätzlich oder alternativ ermöglicht der Vorrat an HO-LOHC Schwankungen des Dehydriergrads des zumindest teilweise entladenen Wasserstoffträgermediums, insbesondere hervorgerufen durch die Dynamik eines Wasserstoffverbrauchers, zu kompensieren. Insbesondere ergibt sich daraus eine gleichmäßigere Reaktionssteuerung der Oxidationsreaktion.

Eine Anlage, die nicht unter die vorliegende Erfindung fällt, mit einer Regelungseinheit zum geregelten Durchführen des Verfahrens, wobei die Regelungseinheit insbesondere mit mindestens einer Fördereinheit, insbesondere einer Zusatz-Heizquelle, einem Sensorelement, einem Pegelsensor und/oder mindestens einem Temperatursensor in dem Dehydrierreaktor und/oder in dem Oxidationsreaktor in, insbesondere bidirektionaler, Signalverbindung steht, ermöglicht eine vorteilhafte, insbesondere automatische, insbesondere vollautomatische Durchführung des Verfahrens. Mittels einer Regelungseinheit kann das Verfahren, insbesondere die Bereitstellung von Wasserstoff automatisiert erfolgen. Dazu steht die Regelungseinheit insbesondere mit mindestens einem Sensor und/oder mit mindestens einem Stellorgan, insbesondere einer Fördereinheit zum Fördern vom Wasserstoffträgermedium durch die Anlage, insbesondere in bidirektionaler Signalverbindung.

Eine Anlage, die nicht unter die vorliegende Erfindung fällt, mit einem Trennapparat, der entlang der Fluidströmungsrichtung bezüglich des Oxidationsreaktors stromabwärts angeordnet ist, zum Abtrennen von Wasser aus einem aus dem Oxidationsreaktor abgeführten Stoffstrom, gewährleistet das Abtrennen von Wasser aus dem Produktstrom, der aus dem Oxidationsreaktor abgeführt wird.

Weitere Merkmale, Vorteile und Einzelheiten der Erfindung ergeben sich aus der nachfolgenden Beschreibung von zwei Ausführungsbeispielen anhand der Zeichnung. Es zeigen:
- Fig. 1: eine schematische Darstellung einer Anlage, die nicht unter die vorliegende Erfindung fällt, bei der Dehydrierreaktor und Oxidationsreaktor im Gegenstromverfahren betrieben werden,
- Fig. 2: eine Fig. 1 entsprechende Darstellung einer Anlage, die nicht unter die vorliegende Erfindung fällt, bei der der Dehydrierreaktor und der Oxidationsreaktor im Kreuzstromverfahren betrieben werden.

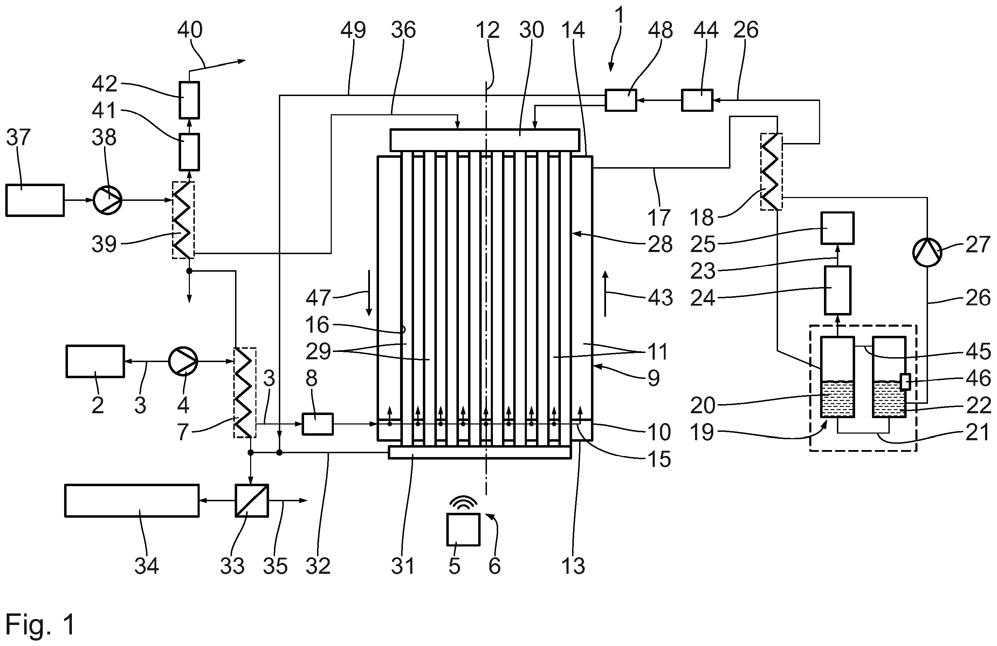

Eine in Fig. 1 insgesamt mit 1 gekennzeichnete Anlage dient zum Bereitstellen von Wasserstoffgas. Die Anlage 1 weist einen ersten Speicherbehälter 2 auf, in dem ein Wasserstoffträgermedium in einem zumindest teilweise beladenen Zustand als Hx-LOHC bevorratet ist. In dem Speicherbehälter können zusätzlich zu Hx-LOHC andere Komponenten angeordnet sein, insbesondere eine zumindest teilweise und/oder vollständig entladene Form des Wasserstoffträgermediums HO-LOHC. Diese anderen Komponenten bilden Verunreinigungen des Hx-LOHC.

An den ersten Speicherbehälter 2 ist eine erste Fluidleitung 3 mit einer regelbaren ersten Fördereinheit 4 angeschlossen. Die erste Fördereinheit 4 ist insbesondere als Flüssigkeitspumpe ausgeführt. Die erste Fördereinheit 4 steht mit einer Regelungseinheit 5 in, insbesondere bidirektionaler, Signalverbindung. Die Regelungseinheit 5 ist in Fig. 1 rein schematisch dargestellt. Die Signalverbindung zwischen der Regelungseinheit 5 und der ersten Fördereinheit 4 kann kabelgebunden oder kabellos, beispielsweise mittels Funkverbindung, ausgeführt sein. Die Signalverbindung 6 ist in Fig. 1 durch ein Funkverbindungssymbol dargestellt.

Die Fluidleitung 3 ist mit einem ersten Kondensator 7 und einer ersten Zusatz-Heizquelle 8 verbunden. Die erste Zusatz-Heizquelle 8 ist insbesondere regelbar ausgeführt und steht insbesondere mit der Regelungseinheit 5 in bidirektionaler Signalverbindung. Die erste Zusatz-Heizquelle 8 ist insbesondere als Elektro-Heizung ausgeführt. Die Fluidleitung 3 mündet in einen Dehydrierreaktor 9. Der Dehydrierreaktor 9 weist einen Dehydrierbehälter 10 auf, in dem mindestens ein Dehydrierraum 11 und insbesondere mehrere Dehydrierräume 11 angeordnet sind. Der Dehydrierbehälter 10 weist eine Längsachse 12 auf, die gemäß dem gezeigten Ausführungsbeispiel vertikal orientiert ist. Die Längsachse 12 kann gegenüber der vertikalen auch geneigt und insbesondere horizontal angeordnet sein. Der Dehydrierbehälter 10 weist eine senkrecht zur Längsachse 12 orientierte Querschnittsfläche auf, die entlang der Längsachse 12 im Wesentlichen unveränderlich ist. Insbesondere ist die Querschnittsfläche des Dehydrierbehälters 10 entlang der Längsachse 12 konstant.

Die Dehydrierräume 11 sind insbesondere rohrförmig ausgeführt. Die Dehydrierräume 11 sind beabstandet zueinander angeordnet. Die Dehydrierräume 11 sind insbesondere parallel zur Längsachse 12 orientiert.

Der Dehydrierbehälter 10 weist eine untere Stirnwand 13 und eine gegenüberliegende, obere Stirnwand 14 auf. Die Dehydrierräume 11 erstrecken sich entlang der Längsachse 12 über einen Großteil der Länge des Dehydrierbehälters 10, insbesondere über mindestens 80 %, insbesondere über mindestens 90 % und insbesondere über mindestens 95 % der Länge des Dehydrierbehälters 10.

Die Fluidleitung 3 ist in einem unteren Bereich des Dehydrierbehälters 10 an diesen angeschlossen. Die Fluidleitung 3 ist mit einem im Dehydrierbehälter 10 angeordneten Verteilerelement 15 verbunden. Das Verteilerelement 15 ist mit jedem Dehydrierraum 11 über ein Verbindungsstück verbunden. Die Verwendung des Verteilelements 15 ist insbesondere vorteilhaft, wenn der Dehydrierreaktor 9 mit seiner Längsachse 12 quer und insbesondere horizontal angeordnet ist. Das Verteilerelement 15 ist auch dann vorteilhaft, wenn der Dehydrierreaktor 9 vertikal ausgerichtet ist und die Zuführung des zumindest teilweise beladenen Wasserstoffträgermediums Hx-LOHC von oben in die Dehydrierräume 11 erfolgt.

Bei dem gezeigten Ausführungsbeispiel, bei dem die Zuführung des Fluids in die Dehydrierräume 11 von unten erfolgt und die Dehydrierräume 11 vertikal orientiert sind, kann das Verteilerelement 15 auch entfallen.

In jedem Dehydrierraum 11 ist ein Dehydrierkatalysator angeordnet. Der Dehydrierkatalysator umfasst ein Katalysatormaterial, das an einem Katalysatorträger befestigt ist. Als Katalysatormaterial für den Dehydrierkatalysator dient insbesondere Platin, Palladium, Nickel, Rhodium und/oder Ruthenium. Das Material des Katalysatorträgers ist insbesondere inert. Der Katalysatorträger weist insbesondere Aluminiumoxid, Siliziumoxid, Siliziumcarbid und/oder Aktivkohle auf. Der Gewichtsanteil des Katalysatormaterials bezogen auf den Katalysatorträger ist zwischen 0,1 % bis 10 %.

Zwischen den zueinander beabstandet angeordneten Dehydrierräumen 11 werden Zwischenräume 16 gebildet. Die Kontur der Zwischenräume 16 ist durch die Kontur der Dehydrierräume 11 und deren beabstandete Anordnung zueinander festgelegt. Insbesondere sind die Dehydrierräume 11 in einem regelmäßigen Raster zueinander angeordnet.

Die Dehydrierräume weisen eine senkrecht zur Längsachse 12 orientierte Kontur auf, die insbesondere regelmäßig ist. Die Kontur ist beispielsweise kreisförmig, viereckig, insbesondere rechteckig oder quadratisch, oder sechseckig.

Der Dehydrierreaktor 9 ist mittels einer zweiten Fluidleitung 17 über einen zweiten Kondensator 18 an einen ersten Trennapparat 19 angeschlossen. Der erste Trennapparat 19 ist ein Gas-Flüssigkeits-Trenner. Insbesondere kann der erste Trennapparat 19 ein nicht näher dargestelltes Druckregelventil aufweisen, mittels dem ein Druck, insbesondere ein Reaktionsdruck in dem Dehydrierreaktor 9 und/oder in dem zweiten Kondensator 18 eingestellt und insbesondere geregelt werden kann. Der Reaktionsdruck wird insbesondere durch Wasserstoffgas und/oder durch dampfförmiges Wasserstoffträgermedium gebildet. Dazu ist das Druckregelventil insbesondere in bidirektionaler Signalverbindung mit der Regelungseinheit 5.

Der erste Trennapparat 19 weist eine erste Kammer 20 und eine mittels einer Verbindungsleitung 21 damit fluidtechnisch verbundene zweite Kammer 22 auf. Es ist alternativ auch möglich, dass der Trennapparat 19 nur eine einzige Kammer umfasst.

Die beiden Kammern 20, 22 sind zusätzlich mittels einer Gasleitung 45 miteinander verbunden. Die Gasleitung 45 gewährleistet einen stets gleichen, insbesondere identischen, Füllstand des flüssigen HO-LOHC in den beiden Kammern 20, 22. Der Füllstand kann mittels eines nicht näher dargestellten Pegelsensors 46 erfasst werden. Der Pegelsensor 46 steht insbesondere mit der Regelungseinheit 5 in bidirektionaler Signalverbindung. Gemäß dem gezeigten Ausführungsbeispiel ist der Pegelsensor 46 an der zweiten Kammer 22 angeordnet. Der Pegelsensor 46 kann alternativ oder zusätzlich auch an der ersten Kammer 20 angeordnet sein.

Die zwei Kammern 20, 22 sind im Sinne kommunizierender Röhren miteinander verknüpft. Darunter ist zu verstehen, dass Flüssigphase und Gasphase der Kammern 20, 22 mittels der Verbindungsleitung 21 und der Gasleitung 45 jeweils zueinander in Kontakt stehen, also kommunizieren. Daraus resultiert, dass sich in beiden Kammern 20, 22 der gleiche Druck und der gleiche Füllstand einstellen, insbesondere unabhängig von der Behälterausführung.

An die erste Kammer 20 des Trennapparats 19 ist eine Wasserstoffgasabführleitung 23 angeschlossen, entlang der eine Reinigungseinheit, insbesondere in Form eines Filterelements 24, insbesondere ein Aktivkohlefilter, angeordnet ist. Zusätzlich oder alternativ zu dem Filterelement 24 kann die Reinigungseinheit eine Adsorptionseinheit, insbesondere zur Druckwechseladsorption, aufweisen. Über die Wasserstoffgasabführleitung 23 kann freigesetztes, gereinigtes Wasserstoffgas H₂, insbesondere für eine Verwertungseinheit 25, bereitgestellt werden. Die Verwertungseinheit 25 ist beispielsweise eine Brennstoffzelle.

Die zweite Kammer 22 des Trennapparats 19 ist über eine Rückführleitung 26 und eine entlang der Rückführleitung 26 angeordnete zweite Fördereinheit 27 an den zweiten Kondensator 18 angeschlossen. Die zweite Fördereinheit ist insbesondere regelbar ausgeführt und steht dazu insbesondere mit der Regelungseinheit 5 in, insbesondere bidirektionaler, Signalverbindung. Die zweite Fördereinheit ist insbesondere identisch zu der ersten Fördereinheit 4 ausgeführt.

Die Rückführleitung 26 verbindet in ihrem weiteren Verlauf im zweiten Kondensator 18 mit einem Oxidationsreaktor 28. Entlang der Rückführleitung 26 ist zwischen dem zweiten Kondensator 18 und dem Oxidationsreaktor 28 eine zweite Zusatz-Heizquelle 44 angeordnet, die insbesondere identisch zu der Zusatz-Heizquelle 8 ausgeführt ist.

Der Oxidationsreaktor 28 weist mindestens einen Oxidationsraum 29 und insbesondere mehrere Oxidationsräume 29 auf. In jedem der Oxidationsräume 29 ist ein Oxidationskatalysator angeordnet. Die Oxidationsräume 29 sind jeweils rohrförmig ausgeführt und werden insbesondere auch als Oxidationsrohre bezeichnet. Die Oxidationsräume 29 sind in den Zwischenräumen 16 des Dehydrierreaktors 9 angeordnet. Insbesondere ist in jedem Zwischenraum 16 ein Oxidationsraum 29 angeordnet. Die Kontur der Oxidationsräume 29 entspricht im Wesentlichen jeweils der Kontur der Zwischenräume 16, insbesondere ist die Kontur der Oxidationsräume 29 identisch mit der der Zwischenräume 16. Die Oxidationsräume 29 sind insbesondere durch Metallrohre gebildet. Es ist denkbar, dass die Metallrohre der Oxidationsräume 29 zumindest bereichsweise in Flächenkontakt mit den Dehydrierräumen 11 stehen. Insbesondere ist es denkbar, dass die Oxidationsrohre 29 von dem Dehydrierkatalysator umgeben und insbesondere in den Dehydrierkatalysator eingebettet sind. Der Oxidationsreaktor 28 ist in den Bauraum des Dehydrierreaktors 9 integriert.

Es ist grundsätzlich auch denkbar, einen derartigen Aufbau für die Dehydrierreaktor 9 und Oxidationsreaktor 28 invers zu realisieren, sodass die rohrförmigen Oxidationsräume 29 für die Dehydrierreaktion genutzt und die entsprechenden Räume 11 für die Oxidationsreaktion verwendet werden.

Es ist insbesondere denkbar, dass ein gemeinsamer Grundkörper mit einer Vielzahl von Durchgangsöffnungen genutzt wird, wobei ein Teil der Durchgangsöffnungen als Dehydrierräume und der verbleibende Teil der Öffnungen als Oxidationsräume 29 genutzt werden kann. Bei dieser Ausgestaltung ist darauf zu achten, dass insbesondere jeweils ein Dehydrierraum 11 benachbart zu mindestens einem Oxidationsraum 29 angeordnet ist. Eine derartige Ausgestaltung ist insbesondere konstruktiv unaufwändig und ermöglicht zudem eine verbesserte Wärmeübertragung. Die Oxidationsräume 29 sind parallel zu der Längsachse 12 und beabstandet zueinander angeordnet. Die Oxidationsräume 29 sind jeweils stirnseitig mit einem Zuführbereich 30 und einem Abführbereich 31 miteinander verbunden. Vorteilhaft ist es, in dem Zuführbereich 30 ein weiteres, nicht dargestelltes

Verteilerelement vorzusehen, das insbesondere entsprechend dem Verteilerelement 15 ausgeführt sein kann. Das weitere Verteilerelement ist insbesondere vorteilhaft, wenn die dem Zuführbereich 30 zugeführten Fluidströme zumindest anteilig flüssig sind. Dadurch ist eine zuverlässige Verteilung des Fluidstroms aus dem Zuführbereich 30 in die Oxidationsräume 29 von oben gewährleistet.

Die Rückführleitung 26 mündet in den Zuführbereich 30, der an einer Oberseite des vertikal orientierten Oxidationsreaktors 28 angeordnet ist. Der Zuführbereich 30 des Oxidationsreaktors 28 bildet eine Mischkammer. Entsprechend ist der gegenüberliegend angeordnete Abführbereich 31 in einem unteren Bereich des Oxidationsreaktors 28 angeordnet.

Der Abführbereich 31 ist über eine Abführleitung 32 mit dem ersten Kondensator 7 und mit einem zweiten Trennapparat 33 verbunden. Der zweite Trennapparat 33 ist als Flüssigkeit-Flüssigkeit-Trenner ausgeführt.

Stromaufwärts des Oxidationsreaktors 28 ist eine Abtrenneinheit 48 vorgesehen. Die Abtrenneinheit 48 dient insbesondere zum Abtrennen verschiedener Bestandteile in einem Gemisch. Die Abtrenneinheit 48 ist mit der Rückführleitung 26, insbesondere unmittelbar, an den Zuführbereich 30 des Oxidationsreaktors 28 angeschlossen.

An die Abtrenneinheit 48 ist eine Bypass-Leitung 49 angeschlossen, die in die Abführleitung 32 mündet. Mit der Bypass-Leitung kann ein abgetrennter Anteil aus dem Gemisch an dem Oxidationsreaktor 28 vorbeigeführt werden.

Die Abtrenneinheit 48 und/oder die Bypass-Leitung 49 sind optional, können also auch entfallen.

An den zweiten Trennapparat 33 sind ein zweiter Speicherbehälter 34 und eine Wasserleitung 35 angeschlossen.

An den Zuführbereich 30 ist eine Luftleitung 36 angeschlossen, die zum Zuführen von Luft in den Zuführbereich 30 dient. Entlang der Luftleitung 36, die mit einem Luftanschluss 37 verbunden ist, ist eine Luftfördereinheit 38 und ein dritter Kondensator 39 angeordnet.

An den dritten Kondensator 39, der zur Vorwärmung der Luft, die dem Zuführbereich 30 zugeführt werden soll, dient, ist der erste Kondensator 7 sowie eine Abgasleitung 40 angeschlossen. Entlang der Abgasleitung 40 ist ein Filterelement, insbesondere ein Aktivkohlefilter 41 angeordnet zum Filtern des Abgases, das über die Abgasleitung 40 insbesondere an die Umgebung abgegeben wird.

Entlang der Abgasleitung 40 ist ein Sensorelement 42, insbesondere eine Lambda-Sonde angeordnet. Das Sensorelement 42 steht in bidirektionaler Signalverbindung mit der Regelungseinheit 5.

Die Regelungseinheit 5 steht mit nicht näher dargestellten Temperatursensoren in bidirektionaler Signalverbindung, die geeignet sind, die Prozesstemperaturen in dem Dehydrierreaktor 9, insbesondere den Dehydrierräumen 11, und/oder in dem Oxidationsreaktor 28, insbesondere den Oxidationsräumen 29, zu erfassen.

Nachfolgend wird ein Verfahren zum Bereitstellen von Wasserstoffgas mit der Anlage 1 näher erläutert.

Hx-LOHC wird aus dem ersten Speicherbehälter 2 mittels der ersten Fördereinheit 4 in dem Dehydrierreaktor 9 gefördert. Das gemäß dem gezeigten Ausführungsbeispiel verwendete Wasserstoffträgermedium weist in der beladenen Form mindestens eine Cyclohexylgruppe auf, wobei zumindest ein Teil der Cyclohexylgruppen unter Wasserstofffreisetzung in Phenylgruppen überführt werden. Die Fördermenge kann mittels der ersten Fördereinheit 4 in Rückkopplung mit der Regelungseinheit 5 gezielt eingestellt und insbesondere geregelt werden. Insbesondere wird die Fördermenge derart geregelt, dass eine ausreichende Verweilzeit des Hx-LOHC im Dehydrierreaktor 9 und damit die Menge des freigesetzten Wasserstoffgases in dem Dehydrierreaktor 9 gewährleistet ist.

Das dem Dehydrierreaktor 9 zuzuführende Hx-LOHC kann mittels des ersten Kondensators 7 und/oder mittels der Zusatz-Heizquelle 8 vorgeheizt werden. Insbesondere erfolgt eine Vorheizung derart, dass das dem Dehydrierreaktor 9 zuzuführende Hx-LOHC im Kontakt mit dem Dehydrierkatalysator mit ausreichend hoher Reaktionsgeschwindigkeit zumindest teilweise unter Wasserstofffreisetzung entladen werden kann, um zumindest 60 % des chemisch gebundenen Wasserstoffs von Hx-LOHC freizusetzen. Insbesondere wird Hx-LOHC auf eine Temperatur zwischen 200°C und 350°C, insbesondere auf eine Temperatur zwischen 250°C und 330°C und insbesondere auf eine Temperatur zwischen 270°C und 310°C, vorgeheizt.

Die erste Zusatz-Heizquelle 8 dient vorteilhafterweise auch bei einer Inbetriebnahme der Anlage 1 aus einer Betriebspause heraus zum Vorheizen von Hx-LOHC. Im stationären Betrieb der Anlage 1 kann die Leistung der ersten Zusatz-Heizquelle 8 reduziert oder abgeschaltet sein, insbesondere wenn der für das Vorwärmen erforderliche Wärmebedarf insbesondere ausschließlich über dem ersten Kondensator 7 bereitgestellt werden kann.

In dem Dehydrierreaktor 9 wird Hx-LOHC mittels des Verteilerelements 15 in die Dehydrierräume 11 abgegeben und in Kontakt mit dem dort angeordneten Dehydrierkatalysator dehydriert. Hx-LOHC wird in die zumindest teilweise entladene Form HO-LOHC unter Wasserstoffgasfreisetzung überführt. Die Fluidströmung erfolgt entlang der jeweiligen Dehydrierräume 11, also im Wesentlichen parallel zur Längsachse 12. Gemäß dem gezeigten Ausführungsbeispiel ist die Fluidströmungsrichtung 43 durch den Dehydrierreaktor 9 vertikal nach oben gerichtet.

Die Kontaktierung des Dehydrierkatalysators im Dehydrierreaktor 9 erfolgt mit dem Hx-LOHC in gasförmiger und/oder flüssiger Form. Insbesondere liegt Hx-LOHC zu mindestens 5 %, zu mindestens 10 % und insbesondere zu mindestens 20 % in flüssiger Form vor.

HO-LOHC wird zusammen mit dem freigesetzten H₂ aus dem Dehydrierreaktor 9 abgeführt und dem zweiten Kondensator 18 zugeführt. In dem zweiten Kondensator 18 wird HO-LOHC abgekühlt und zumindest teilweise kondensiert. Dadurch erfolgt bereits in dem zweiten Kondensator 18 eine Trennung des aus dem Dehydrierreaktor 9 abgeführten Gemischs in gasförmigen Wasserstoff und flüssiges HO-LOHC. Der Anteil an gasförmigem HO-LOHC in dem Gemisch wird zumindest reduziert. Der abgekühlte Gemischstrom wird aus dem zweiten Kondensator 18 in den ersten Trenn-apparat 19 überführt. In dem ersten Trennapparat 19 wird das freigesetzte Wasserstoffgas H₂ von dem Wasserstoffträgermedium HO-LOHC abgetrennt. In der ersten Kammer 20 wird das Wasserstoffgas von dem flüssigen HO-LOHC durch eine an sich bekannte Phasentrennung getrennt und über die Wasserstoffgasabführleitung 23, insbesondere an der Verwertungseinheit 25, zur weiteren Verwendung bereitgestellt.

Ausgehend von der zweiten Kammer 22 wird flüssiges HO-LOHC über die Zuführleitung 26 in den Oxidationsreaktor 28, insbesondere in die Mischkammer 30 zugeführt. Dazu dient die zweite Fördereinheit 27, mittels der die zugeführte Menge von HO-LOHC geregelt werden kann. Die zweite Kammer 22 dient insbesondere zum Ansaugen von HO-LOHC mittels der zweiten Fördereinheit 27 für die Zufuhr in den Oxidationsreaktor 28. Die mittlere Verweilzeit von HO-LOHC in dem ersten Trennapparat 19, insbesondere in der zweiten Kammer 22 beträgt mindestens 5 min. Untersuchungen haben ergeben, dass bei dieser Mindestverweildauer zuverlässig eine Phasentrennung zwischen flüssigen und gasförmigen Bestandteilen stattfindet und insbesondere eine Sättigung des HO-LOHC mit physikalisch gelöstem Wasserstoffgas erreicht wird.

Insbesondere erfolgt eine Vorwärmung des HO-LOHC in dem zweiten Kondensator 18, in dem Wärme von dem aus dem Dehydrierreaktor 9 abgeführten Gemischs, insbesondere Wärme in Folge der Kondensation des HO-LOHC, aufgenommen werden kann. Zusätzlich dient die zweite Zusatz-Heizquelle 44 zum Vorheizen des HO-LOHC.

Insbesondere wird die zweite Fördereinheit 27 zum Ansaugen von H0-LOHC in den Oxidationsreaktor 28 nur dann betrieben, wenn ein ausreichender Füllstand der Kammern 20, 22 gewährleistet ist. Ein ausreichender Füllstand liegt vor, wenn das Nennvolumen der zweiten Kammer 22 mit mindestens 20 %, insbesondere mit mindestens 25 % und insbesondere mit mindestens 30 % gefüllt ist. Insbesondere erfolgt die Regelung der zweiten Fördereinheit 27 derart, dass eine ausreichende Verweilzeit von HO-LOHC in dem Oxidationsreaktor 28 gewährleistet ist. Insbesondere erfolgt die Regelung der Fördermenge von HO-LOHC in den Oxidationsreaktor 28 derart, dass insbesondere mindestens 60 % der im Dehydrierreaktor 9 erforderlichen Dehydrierwärme durch die Oxidation im Oxidationsreaktor 28 bereitgestellt wird.

Mittels der zweiten Zusatz-Heizquelle 44 kann insbesondere gewährleistet werden, dass HO-LOHC auf eine Temperatur vorgewärmt wird, die für die im Oxidationsreaktor 28 durchzuführenden Oxidationsreaktionen erforderlich ist, insbesondere um eine ausreichend hohe Reaktionsgeschwindigkeit gewährleisten zu können. Insbesondere erfolgt das Vorwärmen mittels der zweiten Zusatz-Heizquelle 4 derart, dass zumindest ein Teil von HO-LOHC vor dem Zuführen in den Oxidationsreaktor 28 verdampft. Insbesondere dient die zweite Zusatz-Heizquelle 4 für die Inbetriebnahme der Anlage 1, insbesondere aus einer Betriebspause heraus. Wie die erste Zusatz-Heizquelle 8, kann auch die zweite Zusatz-Heizquelle 44 im stationären Betrieb der Anlage 1 bezüglich ihrer Leistung reduziert oder abgeschaltet werden. Mit der zweiten Zusatz-Heizquelle 4 kann HO-LOHC vor dem Oxidationsreaktor 28 auf eine Temperatur zwischen 150°C und 350°C, insbesondere auf eine Temperatur zwischen 200°C und 300°C und insbesondere auf eine Temperatur von zwischen 280°C und 300°C vorgeheizt werden.

Für die Oxidationsreaktionen im Oxidationsreaktor 28 wird der Fluidstrom aus dem Trennapparat 19 in der Mischkammer 30 des Oxidationsreaktors 28 mit einem Oxidationsmittel, insbesondere Luft, gemischt. Luft wird über den Luftanschluss 37 und die Luftleitung 36 der Mischkammer 30 zugeführt. Die zu fördernde Luftmenge kann mittels der Luftfördereinheit 38 geregelt werden.

Durch das Mischen des Oxidationsmittels, also des Luftstroms, mit dem HO-LOHC in der Mischkammer 9 verbleibt HO-LOHC zumindest teilweise in der Dampfform und wird diesem Zustand den Oxidationsräumen 29 zugeführt. Den Oxidationsräumen 29 wird eine Mischung aus zumindest teilweise entladenem Wasserstoffträgermedium HO-LOHC, dem Oxidationsmittel, Luft, und physikalisch gelöstem und/oder wieder aus der Lösung freigesetztem Wasserstoffgas zugeführt. In Folge dessen finden in den Oxidationsräumen 29 jeweils drei verschiedene Oxidationsreaktionen statt. Bei einer ersten Oxidationsreaktion wird chemisch gebundener Wasserstoff des zumindest teilweise, aber nicht vollständig entladenen Wasserstoffträgermediums HO-LOHC an der Oberfläche des Oxidationskatalysators mit Sauerstoff zu Wasser umgesetzt. Bei einer zweiten Oxidationsreaktion wird in dem Fluidstrom enthaltenes, insbesondere physikalisch gelöstes, Wasserstoffgas an der Oberfläche des Oxidationskatalysators mit Sauerstoff zu Wasser umgesetzt. Eine dritte Oxidationsreaktion betrifft die Umsetzung mindestens einer Methylengruppe -CH₂- des verwendeten Wasserstoffspeichermediums zu einer Ketogruppe -C=O. Durch die dritte Oxidationsreaktion wird HO-LOHC in eine zumindest teilweise oxidierte Form des Wasserstoffträgermediums Oxo-LOHC überführt.

Gemäß dem gezeigten Ausführungsbeispiel durchströmt das Fluidgemisch die Oxidationsräume 29 von den Zuführbereich 30, also der Mischkammer, hin zu dem Abführbereich 31, also entlang einer vertikalen Richtung 47, die nach unten gerichtet ist. Die Fluidströmungsrichtung 47 durch den Oxidationsreaktor 28 ist der Fluidströmungsrichtung 43 durch den Dehydrierreaktor 9 entgegengerichtet. Der Dehydrierreaktor 9 und der Oxidationsreaktor 28 werden im Gegenstromverfahren betrieben.

Die vorstehend beschriebene Betriebsweise des Oxidationsreaktors 28 basiert also darauf, dass HO-LOHC und das Oxidationsmittel zeitgleich im Oxidationsreaktor 28 vorhanden sind.

Alternativ kann der Oxidationsreaktor 28 auch getaktet betrieben werden, indem HO-LOHC und das Oxidationsmittel zeitlich entkoppelt, also wechselweise, dem Oxidationsreaktor 28 zugeführt werden und dort mit dem Katalysator reagieren, wie dies in der Beschreibungseinleitung erläutert ist.

Die Reaktionsprodukte aus den Oxidationsräumen 29 werden im Abführbereich 31 gesammelt und über die Abführleitung 32 aus dem Oxidationsreaktor 28 angeführt. Die Reaktionsprodukte können in dem ersten Kondensator 7 abgekühlt werden. Die abgegebene Wärme dient zum Vorwärmen des Hx-LOHC. Es ist denkbar, dass das über die Abführleitung 32 abgeführte Gemisch, das insbesondere Oxo-LOHC umfasst, zum Vorwärmen des Hx-LOHC dient. Alternativ ist es auch möglich, das heiße Gemisch, das den Dehydrierreaktor 9 über die zweite Fluidleitung 17 verlässt, zum Vorwärmen des Hx-LOHC genutzt wird.

Wenn zum Betrieb der Anlage 1 ein Gemisch aus Benzyltoluol und Diphenylmethan verwendet wird, kann die Abtrenneinheit 48 vorteilhaft genutzt werden. In der Abtrenneinheit 48 kann Diphenylmethan selektiv verdampft und dem Oxidationsreaktor 28 zur Oxidation zugeführt werden. Das abgetrennte Benzyltoluol kann mittels der Bypass-Leitung 49 am Oxidationsreaktor 28 vorbeigeführt und in der Abführleitung 32 mit dem oxidierten Diphenylmethan wiedervereinigt werden. Dadurch kann in dem oxidierten Diphenylmethan durch die Mischung der Schmelzpunkt reduziert werden.

Die Reaktionsprodukte aus dem Abführbereich 31 werden dem zweiten Trennapparat 33 zugeführt und insbesondere Oxo-LOHC von Wasser abgetrennt. Durch die vorherige Kühlung in dem ersten Kondensator 7 werden Oxo-LOHC und Wasser abgekühlt und kondensiert und insbesondere dieser Stoffstrom in die Flüssigphase und Gasphase, die Luftbestandteile aufweisen kann, getrennt und insbesondere der Anteil an gasförmigem Oxo-LOHC abgesenkt. In dem zweiten Trennapparat 33 wird Wasser im Wesentlichen vollständig von Oxo-LOHC abgetrennt und abgeführt. Sofern noch ein geringer Anteil an Wasser in dem flüssigen Oxo-LOHC vorhanden ist, kann dies zusammen in dem zweiten Speicherbehälter 34 gelagert werden. Oxo-LOHC kann aus dem zweiten Speicherbehälter 34 abtransportiert und insbesondere in dem zweiten Speicherbehälter 34 abtransportiert werden und insbesondere an einem anderen, insbesondere energiereichen, Ort katalytisch hydriert werden, um Hx-LOHC wiederherzustellen.

Alternativ kann auf die Wasserabtrennung auch verzichtet werden. In diesem Fall werden Wasser und Oxo-LOHC in dem zweiten Speicherbehälter 34, insbesondere zum Abtransport, bevorratet. Die Abtrennung von Wasser kann nachträglich am Ort der Hydrierung erfolgen, da dort ohnehin reduziertes Hx-LOHC von dem bei der Hydrierung entstandenen Wasser getrennt wird. Da die Hydrierung am energiereichen Ort stattfindet, kann diese Abtrennung des Wassers gegenüber der Abtrennung am Ort der Dehydrierung vorteilhaft sein. Der Einfluss von Wasser auf die Hydrierung ist erfahrungsgemäß geringfügig, d.h. eine negative Beeinträchtigung der Hydrierreaktion in Folge einer Anwesenheit von Wasser ist begrenzt und kann deshalb toleriert werden. Insbesondere kann die Abtrennung von Wasser aus Oxo-LOHC vor der Hydrierung mittels einer Phasentrennung umgesetzt werden. Die Phasentrennung ist unaufwändig durchführbar. Der Aufwand für die Abtrennung von Wasser vor der Hydrierung aus dem Oxo-LOHC ist reduziert.

Es wurde überraschend gefunden, dass unter Anwendung von an sich bekannten Hydrierbedingungen für reinen Wasserstoff und/oder wasserstoffhaltige Gasgemische mit einem Wasserstoff-Partialdruck zwischen 5 bar und 200 bar, insbesondere zwischen 10 bar und 100 bar und insbesondere zwischen 15 bar und 80 bar und unter Verwendung eines Katalysatormaterials, das insbesondere Platin, Rhodium und/oder Palladium aufweist, Oxo-LOHC unter Wasserabspaltung bei einer Selektivität von über 90 %, insbesondere von über 95 % und insbesondere von mindestens 98 % zu Hx-LOHC umgesetzt werden kann. Insbesondere wurde gefunden, dass das aus dem Verfahren in Oxo-LOHC enthaltene Wasser diese Re-Hydrierung nicht negativ beeinträchtigt, die Selektivität verringert und/oder die Lebensdauer des Hydrierkatalysators verkürzt. Nach einer derart erfolgten Hydrierreaktion kann das Wasser mittels einer flüssig-flüssig Phasentrennung unkompliziert abgeschieden werden, da insbesondere die Wasserlöslichkeit des Hx-LOHC äußert gering ist. Die wässrige Phase enthält nach der Abtrennung in dem zweiten Trennapparat 33 nur noch geringe Mengen an organischen Verunreinigungen, insbesondere höchstens 1 Gew.-%, insbesondere höchstens 0,1 Gew.-% und insbesondere höchstens 1000 ppmW.

Das über die Wasserleitung 35 abgeführte Wasser kann daher gesammelt und einer geeigneten Entsorgung zugeführt werden. Alternativ kann die abgetrennte wässrige Phase aus dem zweiten Trennapparat 33 mit einem Aktivkohlefilter als Filterelement kontaktiert werden, die die organischen Verunreinigungen vollständig bindet. Zusätzlich oder alternativ kann eine Abtrennung auch durch ein Membranverfahren oder andere Verfahren erfolgen, die zur Abtrennung großer Moleküle aus Wasser geeignet sind. Das so gereinigte Wasser kann unmittelbar in die Kanalisation entsorgt werden. Das so abgetrennte und gefilterte Wasser ist aus Umweltgründen unbedenklich.

Die Regelung der Luftzufuhr in die Mischkammer 30 basiert insbesondere auf der Aufsaugung von Frischluft aus der Umgebung, wobei zusätzlich oder alternativ Luft mit abgereichertem Sauerstoffgehalt verwendet werden kann. Derartige Luft kann beispielweise aus einem Kathodenraum einer Brennstoffzelle gewonnen werden, aus einer mit Wasserstoff betriebenen Brennkammer, aus einem mit Wasserstoff betriebenen Motor und/oder aus einer mit Wasserstoff betriebenen Turbine stammen. Es ist auch denkbar, dass das über die Abgasleitung 40 aus der Anlage 1 abgegebene Abgas als sauerstoffabgereicherte Luft in der Mischkammer 30 verwendet werden kann.

Eine weitere Sauerstoffquelle könnte ein mit dem Dehydrierreaktor 9 gekoppelter, nicht dargestellter Elektrolyseur sein. Der Elektrolyseur könnte dazu dienen, das in der Anlage 1 als Nebenprodukt gebildete Wasser, das insbesondere in dem zweiten Trennapparat 33 abgetrennt und/oder in den dritten Kondensator 39 abgeschieden wird, in dem Elektrolyseur zu spalten. Der dabei entstehende Wasserstoff könnte als Produkt verwertet und der Sauerstoff an den Luftanschluss 37 zur Verfügung gestellt werden.

Das Abgasgemisch, das Anlage 1 über die Abgasleitung 40 verlässt, umfasst insbesondere Stickstoff, Sauerstoff und Wasserdampf. Das Abgasgemisch ist geeignet, unmittelbar an die Umgebung abgegeben werden zu können.

Insbesondere erfolgt die Luftmengenregelung auf Basis eines von den Sensorelement 42 ermittelten Messwertes in dem Abgas in der Abgasleitung 40.

Der Aktivkohlefilter 24 reinigt insbesondere noch vorhandene Rückstände von organischen Speicherstoffen oder Speicherstofffragmenten, die in dem Wasserstoffstrom vorhanden sein können. Der Aktivkohlefilter 24 garantiert, dass der gereinigte Wasserstoffstrom eine Produktqualität aufweist, die eine bestimmungsgemäße Nutzung ermöglicht. Insbesondere weist das über die Wasserstoffgasabführleitung 23 bereitgestellte Wasserstoffgas Verunreinigungen auf, die höchstens 500 ppm, insbesondere höchstens 50 ppm und insbesondere höchstens 5 ppm aufweisen. Der zur Verfügung gestellte Wasserstoff ist für die energetische Nutzung als Brennstoff in einer Brennstoffzelle, in einer Brennstoffkammer, in einem Motor und/oder in einer Turbine in stationären oder in mobilen Anwendungen geeignet. Eine mobile Anwendung in diesem Sinne ist die Wasserstoffverwendung zur energetischen Versorgung eines Fahrzeugs, insbesondere eines Schiffs, eines Zugs, eines Lastkraftwagens, eines Busses, eines Baufahrzeugs, eines Forstfahrzeugs, eines Traktors, eines Lieferfahrzeugs und/oder eines PKWs. Insbesondere dient der bereitgestellte Wasserstoff zur Bereitstellung der elektrischen Energie zum Betrieb von elektrischen Fahrmotoren. Der bereitgestellte Wasserstoff kann auch als Reduktionsäquivalent oder als Reaktionspartner in einem chemischen Prozess verwendet werden. Der bereitgestellte Wasserstoff kann auch als komprimierter Wasserstoff genutzt werden, um insbesondere einen Wasserstoffdrucktank zu befüllen, insbesondere an Bord eines Wasserstofffahrzeugs.

Die Regelungseinheit 5 regelt insbesondere die Fördereinheiten 4, 27 sowie die Luftfördereinheit 38. Darüber hinaus regelt die Regelungseinheit die Zusatz-Heizquellen 8, 44. Die Regelung der geförderten Fluidmengen erfolgt insbesondere unter Berücksichtigung der Temperaturen im Dehydrierreaktor 9, dem Oxidationsreaktor 28 und unter Berücksichtigung des Sauerstoffgehalts im Abgas, der mittels des Sensorelements 42 ermittelt wird. Für die genannte Regelung steht die Regelungseinheit 5 mit den genannten Komponenten in, insbesondere bidirektionaler, Signalverbindung.

Dadurch, dass die Fluidströmungsrichtung 43 im Dehydrierreaktor 9 von unten nach oben gerichtet ist, ist die Wärmeübertragung von den heißen Wandungen der Oxidationsräume 29 verbessert, da das aufsteigende, freigesetzte Wasserstoffgas eine turbulente Durchmischung eines Gas-Flüssigkeits-Fluidgemisches an den Wandungen der Dehydrierräume 11 bewirkt. Diese turbulente Strömung bewirkt eine verbesserte Wärmeübertragung.

Im Folgenden wird anhand von Fig. 1 ein Verfahren zum Anfahr- und Abfahren der Anlage 1 näher erläutert.

Beim Anfahren wird die Anlage 1 aus einer Betriebspause heraus in einem stationären Betrieb überführt. Dazu wird zuerst HO-LOHC aus dem ersten Trennapparat 19 mittels der zweiten Fördereinheit 27 durch den zweiten Kondensator 18 in die zweite Zusatz-Heizquelle 44 gefördert. Die zweite Zusatz-Heizquelle 44 ist derart gesteuert, insbesondere geregelt, dass H0-LOHC derart vorgewärmt wird, dass nach Luftzumischung in dem Zuführbereich 30 und unter Nutzung der geregelten Luftzufuhr die exothermen Oxidationsreaktionen in dem Oxidationsreaktor 28 erfolgen. Sobald in dem Oxidationsreaktor 28 eine Temperatur von mindestens 250° C erreicht ist, wird die geregelte, erste Fördereinheit 4 in Betrieb genommen, die Hx-LOHC aus dem ersten Speicherbehälter 2 über den ersten Kondensator 7 in den Dehydrierreaktor 9 fördert, wo die katalytische Dehydrierreaktion unter Verbrauch der Wärme aus dem Oxidationsreaktor 28 erfolgt. Zudem wird das Druckregelventil in dem ersten Trennapparat 33 derart geöffnet, dass das freigesetzte Wasserstoffgas mit dem gewünschten Druck nach Durchströmung des Filterelements 24 bereitgestellt wird.

Für das Abfahren der Anlage, also für das Überführen aus dem stationären oder dem dynamischen Betriebszustand in eine Betriebspause, wird zunächst die Luftzufuhr 37 abgestellt. Nach einer Zeitspanne, die drei Verweilzeiten der Luft im Oxidationsreaktor 28 bei stationären oder dynamischen Betriebsbedingungen entspricht, wird die geregelte, zweite Zusatz-Heizquelle 44 und die geregelte zweite Fördereinheit 27 abgestellt. Dadurch werden die Oxidationsreaktionen im Oxidationsreaktor 28 beendet. Zudem wird die erste Zusatz-Heizquelle 8 abgestellt, sodass die Temperatur im Dehydrierreaktor 9 sinkt. Sobald die Temperatur im Dehydrierreaktor 9 einen Wert von 230° C unterschreitet, wird auch die erste Fördereinheit 4 abgestellt, sodass die Durchströmung des Dehydrierreaktors 9 beendet wird. Das Druckregelventil an dem ersten Trennapparat 19 wird geschlossen. Im Dehydrierreaktor 9 baut sich ein Wasserstoffpartialdruck auf, der eine weitere Dehydrierung von Hx-LOHC im Dehydrierreaktor 9 verhindert und insbesondere das Katalysatormaterial durch Wasserstoff-überdruck vor Fremdgasen schützt und in der Betriebspause aktiv hält. In diesem Zustand kühlt die Anlage 1 weiter ab und die Wiederinbetriebnahme kann nach vollständiger Abkühlung auf Umgebungstemperatur oder aus einer Betriebspause heraus eingeleitet werden, die so kurz ist, dass der Dehydrierreaktor 9 und der Oxidationsreaktor 28 aufgrund ihrer massebedingten Trägheit noch eine Temperatur aufweisen können, die oberhalb der Umgebungstemperatur liegen.

Es ist ein besonderes Merkmal des Abfahrprozesses der Anlage 1, dass während der Abkühlphase des Dehydrierreaktors 9 von der Reaktionstemperatur des stationären oder dynamischen Betriebszustands auf unter 230° C noch Hx-LOHC durch den Dehydrierreaktor 9 und den zweiten Kondensator 18 in den ersten Trennapparat 19 gefördert wird. Dieser Strom zeichnet sich dadurch aus, dass wegen der reduzierten Temperatur und mangelnden Wärmebereitstellung im Dehydrierreaktor 9 der erreichte Dehydriergrad, also der zweite Hydriergrad, des HO-LOHC niedriger ist als im stationären oder dynamischen Betriebszustand der Anlage 1. Der erste Trennapparat 19 wird auf diese Weise im Abfahrprozess mit HO-LOHC gefüllt, das sich durch einen erhöhten Anteil an reversibel gebundenem Wasserstoff auszeichnet. Es wurde überraschend gefunden, dass diese Abfahrweise und insbesondere die dadurch bedingte Füllung des ersten Trennapparats 19 mit einer Menge an noch vergleichsweise hoch mit Wasserstoff beladenen Speicherstoff sich sehr günstig auf einen nachfolgenden Anfahrprozess auswirkt. Die Menge an reversibel gebundenem Wasserstoff in HO-LOHC, der sich zu Beginn des Anfahrprozesses im ersten Trennapparat 19 befindet, ist vergleichsweise hoch. Dadurch finden zu Beginn des nachfolgenden Anfahrprozesses die erste und zweite Oxidationsreaktion in verstärktem Umfang statt und ermöglichen eine schnellere Aufheizung des Oxidationsreaktors 28. Dadurch verkürzt sich die Anfahrzeit, da die für die Dehydrierreaktion erforderliche Wärme vom Oxidationsreaktor 28 schneller zur Verfügung gestellt werden kann.

Unter einem im Folgenden beschriebenen dynamischen Lastwechsel wird verstanden, dass die Anlage 1 von einem ersten stationären Betriebszustand in einen zweiten stationären Betriebszustand überführt wird, indem eine geänderte, also erhöhte oder reduzierte Wasserstofffreisetzungsrate vorgesehen ist, also der die Anlage 1 über das Filterelement 24 verlassende Wasserstoffgrasstrom höher oder niedriger ist. Ein dynamischer Lastwechsel kann sich beispielsweise dadurch ergeben, dass die Förderraten der geregelten Luftzufuhr 37 und/oder Förderraten der Fördereinheiten 4, 27 sowie die Heiz-Leistungen der Zusatz-Heizquellen 8, 44 so modifiziert werden, dass sich die mittels des Oxidationsreaktors 28 bereitgestellte Wärmemenge verändert. Daraus ergibt sich ein veränderter Wärmefluss in den Hydrierreaktor 9, was die geänderte Wasserstofffreisetzungsrate bewirkt.

Mittels der Regelungseinheit 5 können die Förderraten der Fördereinheiten 4, 27, der geregelten Luftzufuhr 37 und der Zusatz-Heizquellen 8, 44 so eingestellt werden, dass für jede vom Nutzer der Anlage 1 gewünschte Wasserstofffreisetzungsrate, die die Maximalleistung der Anlage 1 nicht überschreiten darf, Regelparameter gefunden werden, die gewährleisten, dass innerhalb eines veränderlich vorgebbaren Zeitintervalls die Wärmeproduktion im Oxidationsreaktor 28 abzüglich aller Wärmeverluste an die Umgebung für die im Dehydrierreaktor 9 erforderlichen Wärmebedarf ausreichend ist. Dadurch wird zumindest vorrübergehend ein stationärer Betriebszustand garantiert. Im dynamischen Betrieb kann die Anlage 1 zwischen verschiedenen Betriebszuständen wechseln, indem die Regelungseinheit 5 die für den angestrebten Betriebszustand maßgeblichen Regelparameter berechnet und die entsprechenden Parametereinstellungen über die bidirektionalen Signalverbindungen von der Regelungseinheit 5 an die zuvor genannten Komponenten übermittelt. Nach der Einstellung dieser Parameter wechselt die Anlage 1 von dem ersten in den zweiten Betriebszustand.

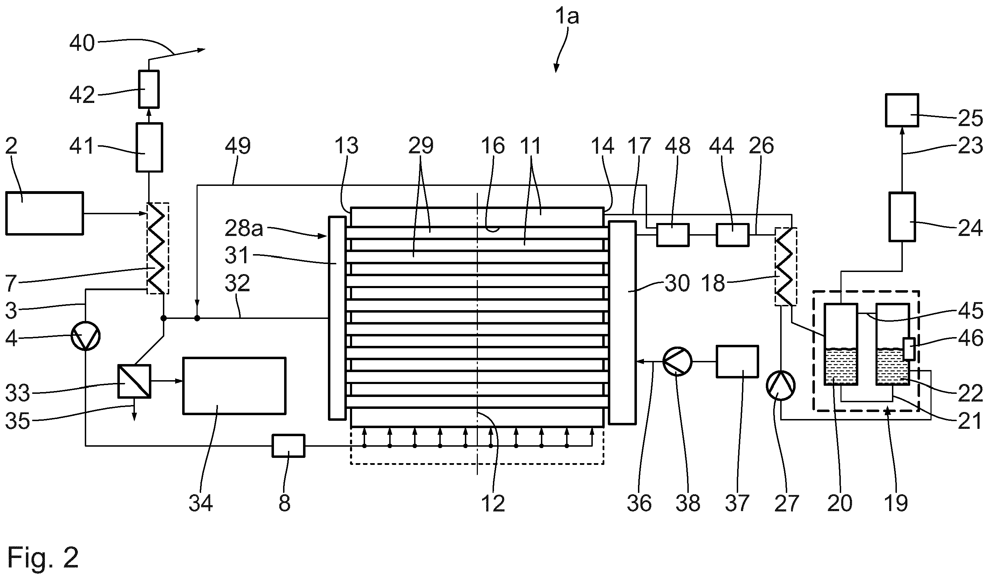

Im Folgenden wird unter Bezugnahme auf Fig. 2 ein zweites Ausführungsbeispiel der Erfindung beschrieben. Konstruktiv identische Teile halten dieselben Bezugszeichen wie bei dem ersten Ausführungsbeispiel, auf dessen Beschreibung hiermit verwiesen wird. Konstruktiv unterschiedliche, jedoch funktionell gleichartige Teile halten dieselben Bezugszeichen mit einem nachgestellten a.

Ein wesentlicher Unterschied der Anlage 1a besteht darin, dass der Oxidationsreaktor 28a mit den Oxidationsräumen 29 quer und insbesondere senkrecht zu der Längsachse 12 des Dehydrierreaktors 9 orientiert ist. Der Dehydrierreaktor 9 und der Oxidationsreaktor 28a werden im Kreuzstromverfahren betrieben.

Der Neigungswinkel der Oxidationsräume 29 gegenüber der Längsachse 12 des Dehydrierreaktors 9 beträgt insbesondere zwischen 30° und 90°, insbesondere zwischen 80° und 90° und insbesondere exakt 90°. Insbesondere sind die Oxidationsräume 29 horizontal orientiert. Dadurch ist gewährleistet, dass in dem Dehydrierreaktor 9 vertikal aufsteigendes Wasserstoffgas die Wandungen der Oxidationsräume 29 senkrecht trifft. Insbesondere ist der Oxidationsreaktor 28a als Bündel von Reaktionsrohren ausgeführt.

Für den Fall, dass der Neigungswinkel der Oxidationsräume 29 kleiner ist als 90°, ist eine Neigung der Oxidationsräume 29 zu dem zweiten Trenn-apparat 33 hin vorgesehen. Dadurch ist gewährleistet, dass aus dem Oxidationsreaktor 28a austretende Flüssigkeit selbsttätig in den zweiten Trenn-apparat 33 gefördert und dort abgetrennt wird.

Gemäß einem nicht dargestellten Ausführungsbeispiel ist es auch möglich, den Oxidationsreaktor 28a so auszuführen, dass er quaderförmige Oxidationsräume aufweist mit Aussparungen, durch die aufsteigendes Wasserstoffgas in dem Bauraum des Dehydrierreaktors 9 nach oben strömen kann.

Der Oxidationsreaktor 28a ermöglicht die Bereitstellung von Wärme, die mindestens 55 %, insbesondere mindestens 70 % und insbesondere mindestens 85 % des Wärmebedarfs entspricht, der für die Dehydrierung im Dehydrierreaktor 9 erforderlich ist.

## Patentansprüche

1. Verfahren zum Bereitstellen von Wasserstoffgas umfassend die Verfahrensschritte
- katalytisches Dehydrieren eines zumindest teilweise beladenen Wasserstoffträgermediums (Hx-LOHC) zu einem zumindest teilweise entladenen Wasserstoffträgermedium (HO-LOHC) in einem Dehydrierreaktor (9) und dadurch Freisetzen von Wasserstoffgas (H₂),
- katalytisches Oxidieren des zumindest teilweise entladenen Wasserstoffträgermediums (HO-LOHC) an einem Oxidationskatalysator zu einem zumindest teilweise oxidierten Wasserstoffträgermedium (Oxo-LOHC) in einem Oxidationsreaktor (28; 28a), wobei das katalytische Oxidieren ein Umsetzen mindestens einer Alkylgruppe zu einer Aldehydgruppe oder zu einer Carbonsäuregruppe, und/oder mindestens einer Alkylengruppen zu einer Ketogruppe, umfasst, wobei das katalytische Oxidieren mittels eines Oxidationsmittels erfolgt,
- Übertragen von in dem Oxidationsreaktor (28; 28a) erzeugter Wärme zu dem Dehydrierreaktor (9).

2. Verfahren gemäß Anspruch 1, **gekennzeichnet durch** Zuführen des zumindest teilweise entladenen Wasserstoffträgermediums (H0-LOHC) und Wasserstoffgases (H₂) aus dem Dehydrierreaktor (9) in einen Trennapparat (19) und Abtrennen des Wasserstoffgases (H₂) von dem zumindest teilweise entladenen Wasserstoffträgermedium (H0-LOHC) in dem Trennapparat (19).

3. Verfahren gemäß einem der vorstehenden Ansprüche, **dadurch gekennzeichnet, dass** das katalytische Oxidieren als zusätzliche Oxidationsreaktion in dem Oxidationsreaktor (28; 28a) [vgl. Seite 5, Zeilen 8 bis 9] ein Umsetzen von Wasserstoffgas (H₂) zu Wasser und/oder ein Umsetzen von an dem zumindest teilweise entladenen Wasserstoffträgermedium (HO-LOHC) chemisch gebundenem Wasserstoff zu Wasser umfasst.

4. Verfahren gemäß einem der vorstehenden Ansprüche, **dadurch gekennzeichnet, dass** das zumindest teilweise entladene Wasserstoffträgermedium (HO-LOHC) mindestens eine oxidierbare Alkylgruppe und/oder Alkylengruppe, insbesondere eine Methylgruppe und/oder Methylengruppe, aufweist, wobei das zumindest teilweise entladene Wasserstoffträgermedium (HO-LOHC) insbesondere Benzyltoluol und/oder eine Mischung aus Diphenylmethan und Biphenyl und/oder eine Mischung aus Benzyltoluol und Diphenylmethan umfasst, und/ oder wobei das zumindest teilweise beladene Wasserstoffträgermedium (Hx-LOHC) ein Kohlenstoffgerüst aufweist, wobei insbesondere höchstens 20% des Kohlenstoffgerüsts, insbesondere höchstens 10% des Kohlenstoffgerüsts und insbesondere höchstens 3% des Kohlenstoffgerüsts durch die Oxidationsreaktion verändert, insbesondere gespaltet werden.

5. Verfahren gemäß einem der vorstehenden Ansprüche, **dadurch gekennzeichnet, dass** der Oxidationskatalysator ein, insbesondere an einem Katalysatorträger befestigtes, katalytisch aktives Katalysatormaterial aufweist, das insbesondere ein Metall aufweist.

6. Verfahren gemäß einem der vorstehenden Ansprüche, **dadurch gekennzeichnet, dass** das Oxidationsmittel Luft ist, die insbesondere mit Sauerstoff abgereichert ist.

7. Verfahren gemäß einem der vorstehenden Ansprüche, **dadurch gekennzeichnet, dass** die mittlere Temperatur (T_{m,ox}) im Oxidationsreaktor (28; 28a) größer ist als die mittlere Temperatur (T_{m,de}) im Dehydrierreaktor (9), wobei insbesondere gilt: T_{m,ox} ≥ T_{m,de} + 10°K, insbesondere T_{m,ox} ≥ T_{m,de} + 15°K und insbesondere T_{m,ox} ≥ T_{m,de} + 20°K.

8. Verfahren gemäß einem der vorstehenden Ansprüche, **dadurch gekennzeichnet, dass** der Dehydrierreaktor (9) und der Oxidationsreaktor (28; 28a) im Gegenstrom oder im Kreuzstrom zueinander betrieben werden.

9. Verfahren gemäß einem der vorstehenden Ansprüche, **dadurch gekennzeichnet, dass** ein geregeltes Übertragen der Wärme von dem Oxidationsreaktor (28; 28a) zu dem Dehydrierreaktor (9) erfolgt, wobei die übertragene Wärmemenge größer oder gleich ist wie der in dem Dehydrierreaktor (9) erforderliche Wärmebedarf.

## Claims

1. A method for providing hydrogen gas comprising the method steps of
- catalytic dehydrogenation of an at least partially charged hydrogen carrier medium (Hx-LOHC) to an at least partially discharged hydrogen carrier medium (HO-LOHC) in a dehydrogenation reactor (9) and thereby releasing hydrogen gas (H₂),
- catalytic oxidation of the at least partially discharged hydrogen carrier medium (HO-LOHC) at an oxidation catalyst to form an at least partially oxidized hydrogen carrier medium (Oxo-LOHC) in an oxidation reactor (28; 28a), wherein the catalytic oxidation comprises reacting at least one alkyl group to an aldehyde group or to a carboxylic acid group, and/or at least one alkylene group to a keto group, wherein the catalytic oxidation is carried out by means of an oxidizing agent,
- transferring heat generated in the oxidation reactor (28; 28a) to the dehydrogenation reactor (9).

2. A method according to claim 1, **characterized by** feeding the at least partially discharged hydrogen carrier medium (HO-LOHC) and hydrogen gas (H₂) from the dehydrogenation reactor (9) into a separation apparatus (19) and separating the hydrogen gas (H₂) from the at least partially discharged hydrogen carrier medium (HO-LOHC) in the separation apparatus (19).

3. A method according to any one of the preceding claims, **characterized in that** the catalytic oxidation, as an additional oxidation reaction in the oxidation reactor (28; 28a) [cf. page 5, lines 8 to 9], comprises reacting hydrogen gas (H₂) to water and/or reacting hydrogen chemically bound to the at least partially discharged hydrogen carrier medium (HO-LOHC) to water.

4. A method according to any one of the preceding claims, **characterized in that** the at least partially discharged hydrogen carrier medium (H0-LOHC) has at least one oxidizable alkyl group and/or alkylene group, in particular a methyl group and/or methylene group, wherein the at least partially discharged hydrogen carrier medium (HO-LOHC) comprises in particular benzyltoluene and/or a mixture of diphenylmethane and biphenyl and/or a mixture of benzyltoluene and diphenylmethane, and/or wherein the at least partially charged hydrogen carrier medium (Hx-LOHC) has a carbon skeleton, wherein in particular at most 20% of the carbon skeleton, in particular at most 10% of the carbon skeleton and in particular at most 3% of the carbon skeleton is changed, in particular cleaved, by the oxidation reaction.

5. A method according to any one of the preceding claims, **characterized in that** the oxidation catalyst comprises a catalytically active catalyst material, in particular comprising a metal, attached in particular to a catalyst carrier.

6. A method according to any one of the preceding claims, **characterized in that** an oxidizing agent is air, which is in particular depleted in oxygen.

7. A method according to any one of the preceding claims, **characterized in that** the mean temperature (T_{m,ox}) in the oxidation reactor (28; 28a) is greater than the mean temperature (T_{m,de}) in the dehydrogenation reactor (9), wherein in particular: T_{m,ox} ≥ T_{m,de} + 10°K, in particular T_{m,ox} ≥ T_{m,de} + 15°K and in particular T_{m,ox} ≥ T_{m,de} + 20°K.

8. A method according to any one of the preceding claims, **characterized in that the** dehydrogenation reactor (9) and the oxidation reactor (28; 28a) are operated in countercurrent or crosscurrent to each other.

9. A method according to any one of the preceding claims, **characterized in that** there is a controlled transfer of heat from the oxidation reactor (28; 28a) to the dehydrogenation reactor (9), wherein the amount of heat transferred is greater than or equal to the heat demand required in the dehydrogenation reactor (9).

## Revendications

1. Procédé de fourniture de gaz hydrogène comprenant les étapes de procédé suivantes :
- la déshydrogénation catalytique d'un milieu porteur d'hydrogène au moins partiellement chargé (Hx-LOHC) en un milieu porteur d'hydrogène au moins partiellement déchargé (HO-LOHC) dans un réacteur de déshydrogénation (9) et, donc, la libération de gaz hydrogène (H₂),
- l'oxydation catalytique du milieu porteur d'hydrogène au moins partiellement déchargé (HO-LOHC) sur un catalyseur d'oxydation en un milieu porteur d'hydrogène au moins partiellement oxydé (Oxo-LOHC) dans un réacteur d'oxydation (28 ; 28a), l'oxydation catalytique comprenant la conversion d'au moins un groupe alkyle en un groupe aldéhyde ou en un groupe acide carboxylique, et/ou d'au moins un groupe alkylène en un groupe céto, l'oxydation catalytique étant effectuée au moyen d'un agent oxydant,
- le transfert de la chaleur générée dans le réacteur d'oxydation (28 ; 28a) vers le réacteur de déshydrogénation (9).

2. Procédé selon la revendication 1, **caractérisé par** l'acheminement du milieu porteur d'hydrogène au moins partiellement déchargé (HO-LOHC) et de gaz hydrogène (H₂) provenant du réacteur de déshydrogénation (9) dans un appareil de séparation (19), et la séparation du gaz hydrogène (H₂) du milieu porteur d'hydrogène au moins partiellement déchargé (HO-LOHC) dans l'appareil de séparation (19).

3. Procédé selon l'une quelconque des revendications précédentes, **caractérisé en ce que** l'oxydation catalytique comprend, en tant que réaction d'oxydation supplémentaire dans le réacteur d'oxydation (28 ; 28a) [cf. page 5, lignes 8 à 9], une réaction de gaz hydrogène (H₂) pour former de l'eau et/ou une réaction d'hydrogène chimiquement lié au milieu porteur d'hydrogène au moins partiellement déchargé (HO-LOHC) former de l'eau.

4. Procédé selon l'une quelconque des revendications précédentes, **caractérisé en ce que** le milieu porteur d'hydrogène au moins partiellement déchargé (HO-LOHC) présente au moins un groupe alkyle et/ou groupe alkylène oxydable, notamment un groupe méthyle et/ou un groupe méthylène, le milieu porteur d'hydrogène au moins partiellement déchargé (HO-LOHC) comprenant notamment du benzyltoluène et/ou un mélange de diphénylméthane et de biphényle et/ou un mélange de benzyltoluène et de diphénylméthane, et/ou le milieu porteur d'hydrogène au moins partiellement chargé (Hx-LOHC) présentant un squelette carboné, notamment au plus 20 % du squelette carboné, notamment au plus 10 % du squelette carboné, et notamment au plus 3 % du squelette carboné étant modifiés, notamment clivés, par la réaction d'oxydation.

5. Procédé selon l'une quelconque des revendications précédentes, **caractérisé en ce que** le catalyseur d'oxydation présente un matériau catalytique catalytiquement actif, fixé notamment sur un support de catalyseur, qui présente notamment un métal.

6. Procédé selon l'une quelconque des revendications précédentes, **caractérisé en ce que** l'agent oxydant est de l'air, qui est notamment appauvri en oxygène.

7. Procédé selon l'une quelconque des revendications précédentes, **caractérisé en ce que** la température moyenne (T_{m,ox}) dans le réacteur d'oxydation (28 ; 28a) est supérieure à la température moyenne (T_{m,de}) dans le réacteur de déshydrogénation (9), avec notamment : T_{m,ox} ≥ T_{m,de} + 10 °K, notamment T_{m,ox} ≥ T_{m,de} + 15 °K et notamment T_{m,ox} ≥ T_{m,de} + 20 °K.

8. Procédé selon l'une quelconque des revendications précédentes, **caractérisé en ce que** le réacteur de déshydrogénation (9) et le réacteur d'oxydation (28 ; 28a) sont exploités l'un par rapport à l'autre en contre-courant ou en courant croisé.

9. Procédé selon l'une quelconque des revendications précédentes, **caractérisé en ce qu**'un transfert régulé de la chaleur du réacteur d'oxydation (28 ; 28a) vers le réacteur de déshydrogénation (9) est effectué, la quantité de chaleur transférée étant supérieure ou égale au besoin en chaleur requis dans le réacteur de déshydrogénation (9).
